# NEUE EUROPÄISCHE PATENTSCHRIFT

(11) **EP 3 366 106 B2**
(45) Veröffentlichungstag und Bekanntmachung des Hinweises auf die Entscheidung über den Einspruch: **04.01.2023**
(45) Hinweis auf die Patenterteilung: 08.04.2020
(21) Anmeldenummer: 17208297.6
(22) Anmeldetag: 19.12.2017
(51) Int. Cl.: A01D 43/08, A01D 41/127, G01N 21/359

(54) **LANDWIRTSCHAFTLICHES ERNTESYSTEM**
AGRICULTURAL HARVESTING SYSTEM
SYSTÈME DE RÉCOLTE AGRICOLE

(30) Priorität: 27.02.2017 DE 102017104009
(43) Veröffentlichungstag der Anmeldung: 29.08.2018
(73) Patentinhaber: CLAAS Selbstfahrende Erntemaschinen GmbH, 33428 Harsewinkel (DE)
(72) Erfinder: Kirchbeck, Alexander, 18137 Drensteinfurt (DE); Sander, Stefan, 33775 Versmold (DE)
(74) Vertreter: Dekker, Lothar Karl Rudolf

(56) Entgegenhaltungen:
- EP-A1- 1 166 619
- EP-A1- 1 360 891
- EP-A1- 2 132 974
- EP-A1- 2 232 978
- EP-A1- 2 620 051
- EP-A1- 2 796 031
- EP-A2- 1 522 214
- EP-A2- 1 639 878
- EP-A2- 1 956 361
- EP-A2- 2 853 146
- EP-B1- 1 407 654
- DE-A1- 19 922 867
- DE-A1-102008 056 557
- DE-B3-102012 207 591
- DE-C1- 10 236 515
- DE-C1- 10 236 515
- US-A- 5 991 025
- US-A1- 2016 088 794
- Anonymous: "DLG-Prüfbericht 5913 F HarvestLab ? Feuchtemessung in Mais", John Deere, January 2010 (2010-01), pages 1-6, XP055763681, Retrieved from the Internet: URL:https://pruefberichte.dlg.org/filestor age/pbdocs/5913F.pdf

## Beschreibung

Die Erfindung betrifft ein landwirtschaftliches Erntesystem mit einer landwirtschaftlichen Erntemaschine nach dem Oberbegriff des Anspruchs 1.

Im Stand der Technik (EP 1 407 654 B1) sind landwirtschaftliche Erntesysteme mit einer landwirtschaftlichen Erntemaschine bekannt, die eine Sensoreinrichtung zur Inhaltsstofferfassung von landwirtschaftlichem Erntegut aufweist. Die Sensoreinrichtung verfügt über einen auf Basis der Nahinfrarotspektroskopie arbeitenden Sensor (NIR-Sensor), an dem ein Erntegutstrom vorbeiführbar ist. Unter einem Erntegutstrom wird hier durch einen Förderkanal der Erntemaschine transportiertes, mittels der Erntemaschine abgeerntetes Erntegut verstanden. Der NIR-Sensor ist dabei üblicherweise in einer Wand des Förderkanals angeordnet und erfasst wellenlängenaufgelöst die Intensität des von den vorbeiströmenden Partikeln des Erntegutstroms reflektierten Lichts. Dabei wird der Erntegutstrom mit breitwandigem, sog. weißen, Licht beaufschlagt. So können die einzelnen lichtangeregten Schwingungsmoden einzelner nachzuweisender Inhaltsstoffe des Ernteguts, die sich durch Absorption, Streuung bzw. Extinktion auswirken, erfasst werden. Das Dokument US 2016/088794 A1 beschreibt ein Fahrerassistenzsystem, das die Verteilung des aus einem Mähdrescher austretenden Gutstromes auf einem Feldboden automatisch regelt, wobei die Häckselqualität des Strohhäckslers auf direktem Weg mittels NIR-Sensorik bestimmt werden kann.

NIR-Sensoren haben sich als besonders vorteilhaft für die Erfassung von für eine Siliermittelzugabe relevanter Inhaltsstoffe des Ernteguts erwiesen. Siliermittel dienen der Aufbereitung bzw. Behandlung von Erntegut, um insbesondere den Gärprozess im Silo zu verbessern. Während des Ernteprozesses mischt eine Siliermittelanlage in der Regel eine Säure mit Wasser in einem guteigenschaftsabhängigen Verhältnis und injiziert das Gemisch in den Erntegutstrom.

Zur Steuerung der Siliermittelanlage werden die vom NIR-Sensor gemessenen Erntegutstromdaten einer Datenverarbeitungseinrichtung zugeführt, die den jeweiligen Gehalt an den interessierenden Inhaltsstoffen (z.B. Zuckergehalt, Proteingehalt, Rohascheanteil und/oder Rohfaseranteil) errechnet. Die Datenverarbeitungseinrichtung generiert dann auf Basis der Erntegutstromdaten entsprechende Steuerungsdaten, über die die Siliermittelanlage und somit die Zugabe von Siliermittel in den Erntegutstrom gesteuert wird.

Unabhängig davon ist es bei Erntemaschinen auch bekannt, verschiedene ihrer landwirtschaftlichen Arbeitsaggregate einzustellen bzw. anzusteuern, wobei die Einstellung bzw. Steuerung der Arbeitsaggregate auf Basis von Daten verschiedener weiterer Sensoren erfolgt. Unter einem landwirtschaftlichen Arbeitsaggregat wird hier insbesondere eine landwirtschaftliche Arbeit unterstützende oder verrichtende Komponente der Erntemaschine verstanden, die mechanisch auf das Erntegut einwirkt. Bei einem Feldhäcksler sind dies beispielsweise das Schneidwerk, die Häckseltrommel, Zuführeinrichtungen, Förder- und Beschleunigungseinrichtungen für das Erntegut, das Hubwerk zur Höhenverstellung des Schneidwerks oder dergleichen.

Problematisch beim Stand der Technik ist, dass die Vielzahl der zur Steuerung der unterschiedlichen Prozesse der Erntemaschine notwendigen Sensoren einen relativ hohen Montage- und Wartungsaufwand mit sich bringt.

Der Erfindung liegt das Problem zugrunde, ein landwirtschaftliches Erntesystem bereitzustellen, das einen reduzierten Montage- und Wartungsaufwand der Erntemaschine gewährleistet.

Das obige Problem wird gemäß einer ersten Lehre der Erfindung bei einem landwirtschaftlichen Erntesystem gemäß dem Oberbegriff von Anspruch 1 durch die Merkmale des kennzeichnenden Teils von Anspruch 1 gelöst.

Bei der landwirtschaftlichen Erntemaschine des vorschlagsgemäßen landwirtschaftlichen Erntesystems handelt es sich insbesondere um einen Feldhäcksler, beispielsweise Maishäcksler. Das Erntesystem bzw. die Erntemaschine weist ein oder mehrere landwirtschaftliche Arbeitsaggregate zur Unterstützung oder Verrichtung landwirtschaftlicher Arbeit auf. Die Arbeitsaggregate sind insbesondere konfiguriert, mechanisch auf das Erntegut einzuwirken. Entsprechende Arbeitsaggregate sind bei einer Erntemaschine beispielsweise eine Häckseltrommel, eine der Häckseltrommel vorgeschaltete Zuführeinrichtung zum Zuführen von Erntegut zur Häckseltrommel, eine der Häckseltrommel nachgeschaltete Nachzerkleinerungsvorrichtung, eine dieser nachgeschaltete Erntegut-Förder- und Beschleunigungseinrichtung oder ein Schneidwerk, das die Pflanzen des Feldbestands abschneidet und als Erntegutstrom in die Erntemaschine leitet. Zusätzlich zu landwirtschaftlichen Arbeitsaggregaten kann die Erntemaschine auch eine Siliermittelanlage aufweisen, die ein Siliermittel in den Erntegutstrom injiziert.

Die Erntemaschine des vorschlagsgemäßen landwirtschaftlichen Erntesystems weist einen Förderkanal auf, durch den der während eines Ernteprozesses durch Abernten eines Feldbestands erzeugte Erntegutstrom geleitet wird. Mit dem Erntegutstrom ist das durch den Förderkanal geleitete bzw. strömende Erntegut gemeint. Das Erntegut wird dabei am vorderen Ende der Erntemaschine im Bereich des Schneidwerks eingezogen und über die Häckseltrommel zu einem Überladerohr geleitet, aus dem das Erntegut wieder austritt, beispielsweise in ein Transportfahrzeug zum Abtransport des Ernteguts zu einem Silo.

In dem Überladerohr oder in einem anderen Abschnitt des Förderkanals ist ferner ein NIR-Sensor einer NIR-Sensoreinrichtung angeordnet, der konfiguriert ist zur Erfassung von Inhaltsstoffen und/oder Eigenschaften des Erntegutstroms, indem der Erntegutstrom in dem Förderkanal an dem NIR-Sensor vorbeigeführt wird.

Vorschlagsgemäß weist die Erntemaschine des landwirtschaftlichen Erntesystems ferner eine gemeinsame Einstelleinheit zur Parametereinstellung des jeweiligen Arbeitsaggregats auf. Die Einstelleinheit ist konfiguriert, mindestens eine Parametereinstellung des jeweiligen Arbeitsaggregats durchzuführen. Die Steuerungsdaten werden von einer Online-Datenverarbeitungseinrichtung für die Steuerung des jeweiligen Arbeitsaggregats, die Bestandteil der NIR-Sensoreinrichtung, insbesondere Bestandteil der Erntemaschine und vorzugsweise der NIR-Sensoreinrichtung ist, auf Basis der von der NIR-Sensoreinrichtung generierten, den erfassten Inhaltsstoffen und/oder Eigenschaften entsprechenden, Erntegutstromdaten generiert.

Mit einer Online-Datenverarbeitungseinrichtung für die Steuerung eines Arbeitsaggregats ist eine Datenverarbeitungseinrichtung gemeint, die die der Arbeitsaggregatsteuerung zugrundeliegenden, von der NIR-Sensoreinrichtung generierten Erntegutstromdaten zeitlich an ihre Generierung und/oder an ihren Empfang gekoppelt verarbeitet. Die Verarbeitung der Erntegutstromdaten durch die Online-Datenverarbeitungseinrichtung erfolgt dabei insbesondere in Echtzeit. Der Begriff "Echtzeit" ist in diesem Zusammenhang weit zu verstehen und bedeutet, dass die Verarbeitung der empfangenen Erntegutstromdaten in einem vorgegebenen Zeitraum ab dem Empfang und/oder der Generierung der Erntegutstromdaten erfolgt, der höchstens eine halbe Stunde, bevorzugt höchstens wenige Sekunden, z.B. höchstens 30 Sekunden, besonders bevorzugt höchstens wenige Bruchteile von Sekunden, z.B. höchstens eine halbe Sekunde, beträgt.

Wesentlich ist die Erkenntnis, dass die vom NIR-Sensor erfassten Inhaltsstoffe und/oder Eigenschaften und die entsprechenden von der NIR-Sensoreinrichtung generierten Erntegutstromdaten auch geeignet sind bzw. dazu genutzt werden können, mindestens ein landwirtschaftliches Arbeitsaggregat der Erntemaschine und/oder des vorschlagsgemäßen landwirtschaftlichen Erntesystems zu steuern. Der NIR-Sensor kann also mehrere weitere Sensoren ersetzen, die bislang im Stand der Technik zusätzlich notwendig waren, um die verschiedenen Arbeitsaggregate und die unterschiedlichen Prozesse einer Erntemaschine zu steuern. Es wird also das Funktionsspektrum der an sich bekannten NIR-Sensoreinrichtung bzw. des an sich bekannten NIR-Sensors gegenüber dem Stand der Technik durch das vorschlagsgemäße Erntesystem erheblich erweitert. Dadurch kann die Gesamtzahl an Sensoren der Erntemaschine reduziert werden, wodurch sich auch der Montage- und Wartungsaufwand derselben reduzieren lässt.

Die genannte Einstelleinheit ist insbesondere derart konfiguriert, dass die mindestens eine Parametereinstellung während desselben Ernteprozesses durchgeführt wird, in dem auch die Inhaltsstoffe und/oder Eigenschaften des Erntegutstroms von dem NIR-Sensor erfasst werden, was insbesondere zeitlich an die Generierung und/oder den Empfang der Erntegutstromdaten gekoppelt ist. Es ist damit möglich, unmittelbar auf von dem NIR-Sensor erfasste Änderungen im Feldbestand und/oder im Erntegut zu reagieren, indem ein oder mehrere Parameter des jeweiligen Arbeitsaggregats geändert bzw. das Arbeitsaggregat entsprechend verstellt wird.

Bei einem landwirtschaftlichen Arbeitsaggregat handelt es sich vorschlagsgemäß insbesondere um ein solches, das konfiguriert ist zur Handhabung, insbesondere zum Transport (Zuführeinrichtung, Fördereinrichtung etc.) und/oder zum Zerkleinern (Schneidwerk, Häckseltrommel etc.), von Erntegut im Erntegutstrom. Vorzugsweise ist das Arbeitsaggregat Bestandteil der landwirtschaftlichen Erntemaschine des Erntesystems.

Die landwirtschaftliche Erntemaschine des vorschlagsgemäßen landwirtschaftlichen Erntesystems weist gemäß der Ausgestaltung in Anspruch 2 als Arbeitsaggregat eine Nachzerkleinerungsvorrichtung für das Erntegut im Erntegutstrom auf, wobei die Einstelleinheit konfiguriert ist, als Parametereinstellung die Einstellung der Spaltweite und/oder der Antriebsleistung der Nachzerkleinerungsvorrichtung durchzuführen. Eine solche Nachzerkleinerungsvorrichtung dient speziell dazu, die Frucht bzw. die Körner, insbesondere die Maiskörner, aufzubrechen und damit verdaubar zu machen. Bei diesem Nachzerkleinerungsprozess muss berücksichtigt werden, dass ein Korn mit einer relativ hohen Feuchte und einem entsprechend geringen Trockenmassegehalt relativ weich bzw. gummiartig ist und sich in diesem Zustand weniger gut als ein trockeneres Korn mit einem höheren Trockenmassegehalt aufbrechen lässt. Auch der Stärkeanteil im Korn beeinflusst die Funktion der Nachzerkleinerungsvorrichtung. Der NIR-Sensor erlaubt es in diesem Fall, den Trockenmassegehalt und/oder Stärkeanteil des Korns zu bestimmen und davon abhängig eine Parametereinstellung der Nachzerkleinerungsvorrichtung zu bewirken. Beispielsweise wird, wenn ein relativ kleiner Trockenmassegehalt und/oder Stärkeanteil des Korns gemessen wird, die Spaltweite der Nachzerkleinerungsvorrichtung verringert, wohingegen dann, wenn ein relativ hoher Trockenmassegehalt und/oder Stärkeanteil gemessen wird, die Spaltweite erhöht wird. Zusätzlich oder alternativ lässt sich auch a Abhängig von dem gemessenen Trockenmassegehalt und/oder Stärkeanteil des Korns lässt sich die Antriebsleistung der Nachzerkleinerungsvorrichtung entsprechend anpassen.

Gemäß der jeweiligen Ausgestaltung in Anspruch 3 und Anspruch 4 weist die landwirtschaftliche Erntemaschine des vorschlagsgemäßen landwirtschaftlichen Erntesystems als Arbeitsaggregat ein Schneidwerk auf, wobei die Einstelleinheit konfiguriert ist, als Parametereinstellung die Einstellung der Schnitthöhe des Ernteguts durchzuführen. Eine Änderung der Schnitthöhe kann beispielsweise gewünscht sein, wenn das Erntegut als Futtermittel weiterverarbeitet werden soll und im Erntegutstrom ein relativ hoher Rohfaseranteil vom NIR-Sensor gemessen wird. So haben die Faserbestandteile des Ernteguts keinen nennenswerten Futterwert und sind daher in diesem Fall unerwünscht. Grundsätzlich kann das Erntegut aber auch als Substrat für Biogasanlagen dienen, wobei dann ein vergleichsweise hoher Rohfaseranteil gewünscht sein kann. Grundsätzlich hat die Schnitthöhe auch einen Einfluss auf den Anteil an Rohasche, insbesondere Sand, im Erntegutstrom, der wiederum den Verschleiß innerhalb der Maschine erhöht und zu Fehlgärungen im Silo führen kann. Durch Änderung der Schnitthöhe, was über eine Parametereinstellung des Schneidwerks erfolgt, lässt sich also der Rohfaseranteil und auch der Anteil an Rohasche im Erntegutstrom verändern.

Gemäß der jeweiligen Ausgestaltung in Anspruch 5 und Anspruch 6 weist die landwirtschaftliche Erntemaschine des vorschlagsgemäßen landwirtschaftlichen Erntesystems als Arbeitsaggregate eine Zuführeinrichtung und eine Häckseltrommel auf, wobei die Einstelleinheit konfiguriert ist, als Parametereinstellung die Einstellung der Schnittlänge des Ernteguts durchzuführen. Die Schnittlänge lässt sich unter anderem durch die Geschwindigkeit der Zuführung des Ernteguts zur Häckseltrommel mit der Zuführeinrichtung und/oder durch die Drehzahl der Häckseltrommel verändern. Eine entsprechende Parametereinstellung der Zuführeinrichtung und/oder der Häckseltrommel kann auch in diesem Fall auf Basis von vom NIR-Sensor erfassten Inhaltsstoffen und/oder Eigenschaften bzw. von der NIR-Sensoreinrichtung darauf basierend generierten Erntegutstromdaten erfolgen, beispielsweise dem von dem NIR-Sensor gemessenen Trockenmassegehalt und/oder Rohfaseranteil des Ernteguts. Eine Verringerung der Schnittlänge ist beispielsweise dann erforderlich, wenn der Trockenmassegehalt und/oder Rohfaseranteil des Ernteguts, d. h. der Gesamtheit aus Körnern, Blättern und Stängeln, vergleichsweise hoch ist, was eine spätere Verdichtung in einem Silo, insbesondere Fahrsilo, erschweren würde. Ist der Trockenmassegehalt und/oder Rohfaseranteil des Ernteguts dagegen relativ gering, kann die Schnittlänge auch größer gewählt werden.

Zusätzlich oder alternativ zu den vorangehend beschriebenen Ausgestaltungen, die die Online-Datenverarbeitungseinrichtung näher definiert haben, kann das landwirtschaftliche Erntesystem ferner eine Offline-Datenverarbeitungseinrichtung umfassen.

Dabei weist die Erntemaschine des landwirtschaftlichen Erntesystems auch eine Datenübertragungseinheit auf, die konfiguriert ist zur Übertragung von von der NIR-Sensoreinrichtung generierten, den vom NIR-Sensor erfassten Inhaltsstoffen und/oder Eigenschaften entsprechenden, Erntegutstromdaten an die Offline-Datenverarbeitungseinrichtung zur zeitlich von ihrer Generierung und/oder ihrem Empfang entkoppelten Verarbeitung der Erntegutstromdaten (Anspruch 7). Insbesondere ist die Offline-Datenverarbeitungseinrichtung konfiguriert, zumindest auf Basis der von der NIR-Sensoreinrichtung generierten Erntegutstromdaten Steuerungsdaten zur Steuerung eines dem Ernteprozess nachfolgenden landwirtschaftlichen Arbeitsprozesses zu generieren. Wesentlich ist dabei die Erkenntnis, dass die von der NIR-Sensoreinrichtung generierten Erntegutstromdaten auch geeignet sind bzw. dazu genutzt werden können, einen oder mehrere dem Ernteprozess nachfolgende landwirtschaftliche Arbeitsprozesse zu planen und durchzuführen, im weitesten Sinne also zu regeln. Das Funktionsspektrum der bekannten NIR-Sensoreinrichtung bzw. des bekannten NIR-Sensors wird also gegenüber dem Stand der Technik durch das Vorhandensein einer Online-Datenverarbeitungseinrichtung noch weiter vergrößert. Die Planung und Durchführung von dem Ernteprozess nachfolgenden Arbeitsprozesse kann damit vereinfacht und optimiert werden.

Dabei kann auch die Offline-Datenverarbeitungseinrichtung ggf. zusätzlich auf Sensordaten, insbesondere Erntegutstromdaten, mindestens eines weiteren Sensors zugreifen, der insbesondere kein NIR-Sensor ist, sondern beispielsweise eine Kamera, die insbesondere äußere Guteigenschaften des Erntegutstroms bzw. der strömenden Partikel erfasst (Crop Quality Camera).

In den Ansprüchen 8 bis 13 sind verschiedene Beispiele von Daten definiert, die die zusätzliche Offline-Datenverarbeitungseinrichtung, grundsätzlich aber auch die Online-Datenverarbeitungseinrichtung, auf Basis der von der NIR-Sensoreinrichtung empfangenen Erntegutstromdaten generieren kann. Die generierten Erntegutstromdaten werden dann mit entsprechenden Referenzdaten verglichen, die in der jeweiligen Datenverarbeitungseinrichtung gespeichert oder dieser zugeführt werden können. Auf Basis des Vergleichs werden dann die besagten Steuerungsdaten zur Steuerung eines bzw. des dem Ernteprozess nachfolgenden landwirtschaftlichen Arbeitsprozesses generiert.

Einige landwirtschaftliche Arbeitsprozesse, die sich mittels der Steuerungsdaten steuern lassen, definiert Anspruch 14.

Gemäß noch einer Ausgestaltung des Erntesystems kann die Offline-Datenverarbeitungseinrichtung schließlich auch konfiguriert sein, auf Basis von von der NIR-Sensoreinrichtung generierten, den vom NIR-Sensor erfassten Inhaltsstoffen und/oder Eigenschaften (Eiweißgehalt, Eiweißart, Zuckergehalt, Stärkegehalt, Fettgehalt und/oder Trockenmassegehalt etc. des Korns; Trockenmassegehalt, Rohfaseranteil, Rohascheanteil, volumetrische Energiedichte und/oder gravimetrische Energiedichte etc. des Ernteguts) entsprechenden, Erntegutstromdaten zusätzliche Steuerungsdaten für die Einstelleinheit zu generieren, wobei die Einstelleinheit konfiguriert ist, das jeweilige Arbeitsaggregat zusätzlich auch auf Basis der zusätzlichen Steuerungsdaten einzustellen (Anspruch 15).

Gemäß der Ausgestaltung nach Anspruch 16 ist vorgesehen, dass nicht nur die Online-Datenverarbeitungseinrichtung, sondern auch die Offline-Datenverarbeitungseinrichtung (23) konfiguriert ist,
- Daten über den Trockenmassegehalt und/oder Stärkeanteil der Frucht des abgeernteten Feldbestands (16) zu generieren, einen Vergleich der generierten Daten mit Referenzdaten durchzuführen und auf Basis des Vergleichs die Steuerungsdaten zur Durchführung der Parametereinstellung der Nachzerkleinerungsvorrichtung (5) zu generieren, und dass die Einstelleinheit (13) konfiguriert ist, als Parametereinstellung die Einstellung der Spaltweite und/oder der Antriebsleistung der Nachzerkleinerungsvorrichtung (5) durchzuführen, und/oder
- Daten über den Rohfaseranteil des abgeernteten Feldbestands (16) zu generieren, einen Vergleich der generierten Daten mit Referenzdaten durchzuführen und auf Basis des Vergleichs die Steuerungsdaten zur Durchführung der Parametereinstellung des Schneidwerks (2) zu generieren, und dass die Einstelleinheit (13) konfiguriert ist, als Parametereinstellung die Einstellung der Schnitthöhe des Ernteguts (10) durchzuführen, und/oder
- Daten über den Rohascheanteil des abgeernteten Feldbestands (16) zu generieren, einen Vergleich der generierten Daten mit Referenzdaten durchzuführen und auf Basis des Vergleichs die Steuerungsdaten zur Durchführung der Parametereinstellung des Schneidwerks (2) zu generieren, und dass die Einstelleinheit (13) konfiguriert ist, als Parametereinstellung die Einstellung der Schnitthöhe des Ernteguts (10) durchzuführen, und/oder
- Daten über den Trockenmassegehalt des abgeernteten Feldbestands (16) zu generieren, einen Vergleich der generierten Daten mit Referenzdaten durchzuführen und auf Basis des Vergleichs die Steuerungsdaten zur Durchführung der Parametereinstellung der Zuführeinrichtung (3) und/oder der Häckseltrommel (4) zu generieren, und dass die Einstelleinheit (13) konfiguriert ist, als Parametereinstellung die Einstellung der Schnittlänge des Ernteguts (10) durchzuführen, und/oder
- Daten über den Rohfaseranteil des abgeernteten Feldbestands (16) zu generieren, einen Vergleich der generierten Daten mit Referenzdaten durchzuführen und auf Basis des Vergleichs die Steuerungsdaten zur Durchführung der Parametereinstellung der Zuführeinrichtung (3) und/oder der Häckseltrommel (4) zu generieren, und dass die Einstelleinheit (13) konfiguriert ist, als Parametereinstellung die Einstellung der Schnittlänge des Ernteguts (10) durchzuführen.

Das landwirtschaftliche Erntesystem weist gemäß der Ausgestaltung nach Anspruch 17 ferner ein Ortungssystem auf. Dabei kann es sich um einen GPS- bzw. Geosensor handeln, der mit einem GPS-Satelliten kommuniziert. Insbesondere ist der GPS- bzw. Geosensor Bestandteil der landwirtschaftlichen Erntemaschine. Dabei ist die Online-Datenverarbeitungseinrichtung und/oder die Offline-Datenverarbeitungseinrichtung konfiguriert, den Erntegutstromdaten vom Ortungssystem generierte Geodaten zuzuordnen und/oder georeferenzierte Erntegutstromdaten zu verarbeiten. Mit Geodaten sind Daten gemeint, die eine räumliche Lage auf der Erdoberfläche definieren, also eine Positionsbestimmung erlauben. Die Erntegutstromdaten können darüber einer bestimmten Position auf der Erdoberfläche eindeutig zugeordnet werden (sog. Georeferenzierung). Zusätzlich oder alternativ kann das landwirtschaftliche Erntesystem auch eine Anzeigeeinrichtung aufweisen, mit der sich die Erntegutstromdaten, Referenzdaten, Steuerungsdaten und/oder Geodaten anzeigen lassen. Auch kann als weiteren Sensor eine Kamera vorgesehen sein, wobei der Sensor bzw. die Kamera konfiguriert ist, äußere Eigenschaften des Erntegutstroms zu erfassen.

Die Online-Datenverarbeitungseinrichtung und/oder die Offline-Datenverarbeitungseinrichtung kann schließlich gemäß der Ausgestaltung nach Anspruch 18 Bestandteil der landwirtschaftlichen Erntemaschine oder eines von der landwirtschaftlichen Erntemaschine (zumindest während des Ernteprozesses) räumlich entfernten, insbesondere ortsfesten, Datenverarbeitungszentrums sein, welches insbesondere Bestandteil des Erntesystems ist. Grundsätzlich ist es aber auch denkbar, dass die Online-Datenverarbeitungseinrichtung und/oder die Offline-Datenverarbeitungseinrichtung sowohl Bestandteil der landwirtschaftlichen Erntemaschine als auch des davon räumlich entfernten Datenverarbeitungszentrums ist, in diesem Fall also mehrteilig aufgebaut ist.

Nach einer weiteren Lehre gemäß Anspruch 19, der eigenständige Bedeutung zukommt, wird ein Verfahren zum Betrieb eines wie zuvor definierten landwirtschaftlichen Erntesystems beansprucht, bei dem das jeweilige Arbeitsaggregat zumindest auf Basis der Steuerungsdaten angesteuert wird, die von der Online-Datenverarbeitungseinrichtung anhand der von der NIR-Sensoreinrichtung übertragenen Daten generiert worden sind.

Gemäß einer Ausgestaltung des vorschlagsgemäßen Verfahrens überträgt die Datenübertragungseinheit von der NIR-Sensoreinrichtung generierte, den vom NIR-Sensor erfassten Inhaltsstoffen und/oder Eigenschaften entsprechende, Erntegutstromdaten an die Offline-Datenverarbeitungseinrichtung, die die Erntegutstromdaten wiederum zeitlich von ihrer Generierung und/oder ihrem Empfang entkoppelt verarbeitet (Anspruch 20).

Im Folgenden wird die Erfindung anhand einer lediglich ein Ausführungsbeispiel darstellenden Zeichnung näher erläutert. In der Zeichnung zeigt
- Fig. 1: eine schematische Draufsicht eines vorschlagsgemäßen landwirtschaftlichen Erntesystems mit einer Erntemaschine während eines Ernteprozesses und
- Fig. 2: eine schematische Seitenansicht der landwirtschaftlichen Erntemaschine des landwirtschaftlichen Erntesystems in Fig. 1.

Das vorschlagsgemäße landwirtschaftliche Erntesystem und das vorschlagsgemäße Verfahren erlauben eine Ansteuerung und insbesondere Parametereinstellung eines oder mehrerer landwirtschaftlicher Arbeitsaggregate 2, 3, 4, 5, die insbesondere Bestandteil der Erntemaschine 1 des landwirtschaftlichen Erntesystems sind und zur Unterstützung oder Verrichtung landwirtschaftlicher Arbeit dienen.

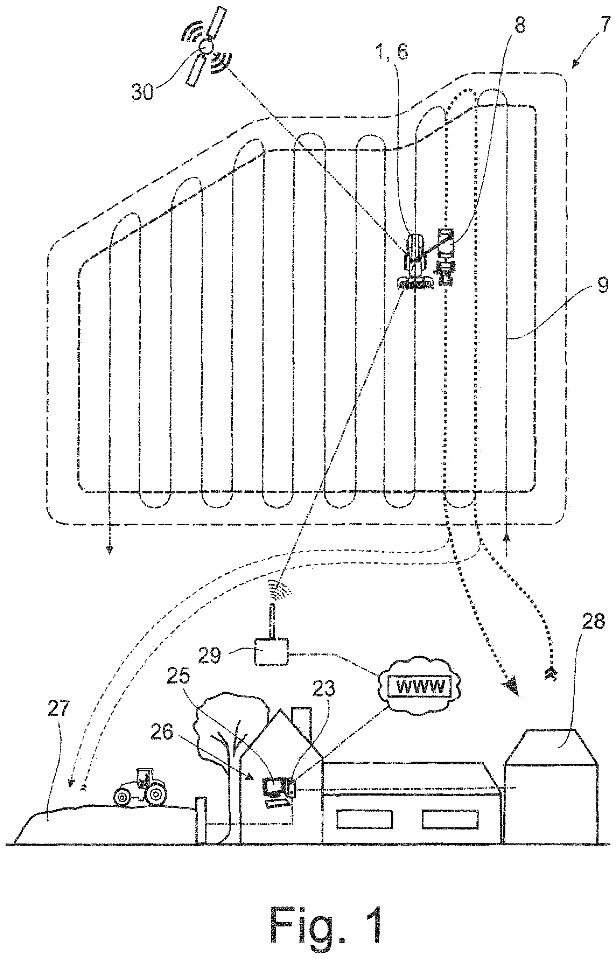

In Fig. 1 ist dargestellt, wie eine landwirtschaftliche Erntemaschine 1 eines landwirtschaftlichen Erntesystems, hier und vorzugsweise ein Feldhäcksler 6, ein Feld 7 zusammenhängend mit einem Transportfahrzeug 8 aberntet. Das Feld 7 ist mit entsprechenden Fahrspuren 9 dargestellt, denen die landwirtschaftliche Erntemaschine 1 folgt. Das Transportfahrzeug 8 fährt zumindest abschnittsweise neben der landwirtschaftlichen Erntemaschine 1 her, um zwischendurch Erntegut 10 aufzunehmen und abzutransportieren. Bei dem Erntegut 10 handelt es sich hier und vorzugsweise um gehäckselten Mais, der von dem Transportfahrzeug 8 entweder zu einem Silo 27 zur Futtermittelerzeugung oder zu einer Biogasanlage 28, die ebenfalls ein Silo (nicht dargestellt) aufweisen kann, transportiert wird.

Ferner ist in Fig. 1, hier als Teil der landwirtschaftlichen Erntemaschine 1, eine Online-Datenverarbeitungseinrichtung 11 dargestellt, das heißt eine Datenverarbeitungseinrichtung, die die empfangenen Daten vorzugsweise innerhalb einer festgelegten Zeitspanne nach ihrem Empfang und insbesondere nach ihrer Generierung, also in Echtzeit, verarbeiten kann. Die Online-Datenverarbeitungseinrichtung 11 empfängt von einer NIR-Sensoreinrichtung 12 der landwirtschaftlichen Erntemaschine 1 Erntegutstromdaten und generiert auf Basis der Erntegutstromdaten Steuerungsdaten für eine Einstelleinheit 13, die auf Basis dieser Daten eines oder mehrere der Arbeitsaggregate 2, 3, 4, 5 ansteuert bzw. mindestens eine Parametereinstellung des jeweiligen Arbeitsaggregats 2, 3, 4, 5 durchführt.

Zur Erzeugung der Erntegutstromdaten weist die NIR-Sensoreinrichtung 12 einen NIR-Sensor 14 auf, der in oder an einem Förderkanal 15 der landwirtschaftlichen Erntemaschine 1 angeordnet ist und an dem ein Erntegutstrom S vorbeiführbar ist. Mit einem Erntegutstrom S ist das durch Abernten eines Feldbestands 16 erzeugte, zerkleinerte Erntegut 10 gemeint, das durch den Förderkanal 15 strömt und anschließend von dem Transportfahrzeug 8 aufgenommen und abtransportiert wird.

Die NIR-Sensoreinrichtung 12 arbeitet auf Basis der Nahinfrarotspektroskopie und ist dadurch geeignet, Inhaltsstoffe und/oder Eigenschaften des Erntegutstroms S mit dem NIR-Sensor 14 zu erfassen und den erfassten Inhaltsstoffen und/oder Eigenschaften entsprechende Erntegutstromdaten zu generieren. Die Erntegutstromdaten werden dann von der NIR-Sensoreinrichtung 12 der landwirtschaftlichen Erntemaschine 1 an die Online-Datenverarbeitungseinrichtung 11 übertragen, die hier Bestandteil der landwirtschaftlichen Erntemaschine 1 ist.

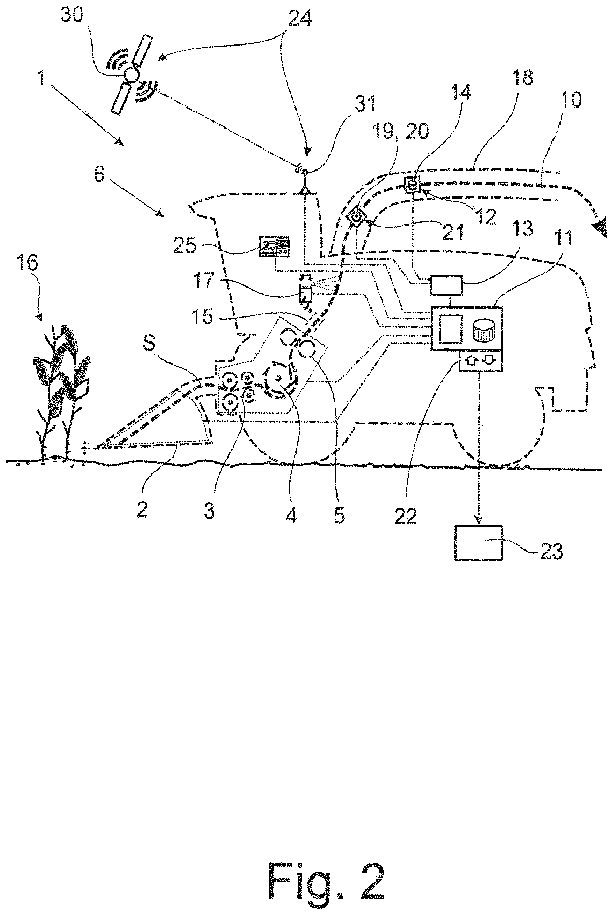

Fig. 2 zeigt die landwirtschaftliche Erntemaschine 1 aus Fig. 1 während eines Ernteprozesses, bei welchem durch Abernten eines Feldbestands 16 Erntegutstromdaten generiert und an eine Online-Datenverarbeitungseinrichtung 11 übertragen werden.

Wie in Fig. 2 zu erkennen ist, wird der Erntegutstrom S durch einen Förderkanal 15 an mehreren landwirtschaftlichen Arbeitsaggregaten 2, 3, 4, 5 und, hier und vorzugsweise, an einer Siliermittelanlage 17 vorbeigeführt. Der Förderkanal 15 beginnt am vorderen Ende der landwirtschaftlichen Erntemaschine 1 am Schneidwerk 2 und endet am Ende des Überladerohrs 18. Vom Schneidwerk 2 aus wird der Erntegutstrom S über eine Zuführeinrichtung 3 einer Häckseltrommel 4 zugeführt, die das geschnittene Erntegut 10 weiter zerkleinert. Anschließend durchläuft der Erntegutstrom S eine Nachzerkleinerungsvorrichtung 5, einen sog. Cracker. Im weiteren Verlauf wird der Erntegutstrom S hier an der Siliermittelanlage 17 vorbeigeführt, die dem Erntegutstrom S ein Siliermittel zuführt. Anschließend passiert der Erntegutstrom S einen NIR-Sensor 14, der hier beispielhaft im Überladerohr 18 angeordnet ist, grundsätzlich aber auch an anderer Stelle angeordnet sein kann. Der NIR-Sensor 14 erfasst dann Inhaltsstoffe und/oder Eigenschaften des Erntegutstroms S, wobei die NIR-Sensoreinrichtung 12 den erfassten Inhaltsstoffen und/oder Eigenschaften entsprechende Erntegutstromdaten generiert, die dann von der NIR-Sensoreinrichtung 12 an die interne Online-Datenverarbeitungseinrichtung 11 übertragen werden.

Im Folgenden werden nun einige konkrete Anwendungsfälle einer Online-Datenverarbeitungseinrichtung 11 der landwirtschaftlichen Erntemaschine 1 des vorschlagsgemäßen landwirtschaftlichen Erntesystems beispielhaft beschrieben.

In einem Anwendungsfall erzeugt die Online-Datenverarbeitungseinrichtung 11 auf Basis der von der NIR-Sensoreinrichtung 12 generierten Erntegutstromdaten Steuerungsdaten, die es der Einstelleinheit 13 erlauben, die Nachzerkleinerungsvorrichtung 5 einzustellen, d.h. eine Parametereinstellung durchzuführen. Als Parametereinstellung der Nachzerkleinerungsvorrichtung 5 kann die Einstelleinheit 13 eine Einstellung der Spaltweite und/oder der Antriebsleistung der Nachzerkleinerungsvorrichtung 5 durchführen.

Der NIR-Sensor 14 erlaubt es hier und vorzugsweise, den Stärkeanteil in Partikeln, die im Erntegutstrom S am NIR-Sensor 14 vorbeigeführt werden, und deren Feuchtigkeitsgehalt zu messen. Der gemessene Stärkeanteil erlaubt es der Online-Datenverarbeitungseinrichtung 11 zunächst zu ermitteln, um welchen Bestandteil der abgeernteten Pflanze es sich hierbei handelt, d. h., ob es sich hier um Körner oder aber um Faserbestandteile handelt. Ermittelt der NIR-Sensor 14 beispielsweise einen Stärkeanteil von mindestens 70 %, vorzugsweise von mindestens 80 %, weiter vorzugsweise von mindestens 90 %, erkennt die Online-Datenverarbeitungseinrichtung 11, dass es sich bei den jeweiligen Partikeln, die soeben vom NIR-Sensor 14 erfasst worden sind, um Körner oder Teile davon handeln muss. Der von dem NIR-Sensor 14 ebenfalls gemessene Feuchtigkeitsgehalt wird dann von der Online-Datenverarbeitungseinrichtung 29 dem Pflanzenbestandteil "Korn" zugeordnet, wodurch eindeutig feststeht, dass der gemessene Feuchtigkeitsgehalt und damit der Trockenmassegehalt derjenige der Körner im Erntegutstrom S ist. Der ermittelte Korn-Trockenmassegehalt kann dann von der Online-Datenverarbeitungseinrichtung 11 mit entsprechenden Sollwerten für die Trockenmasse verglichen werden, woraufhin auf Basis des Vergleichsergebnisses die Spaltweite und/oder Antriebsleistung der Nachzerkleinerungsvorrichtung 5 so angepasst wird, dass die Körner in der Nachzerkleinerungsvorrichtung 5 möglichst optimal aufgebrochen werden.

Zur Unterstützung der Steuerung eines oder mehrerer Arbeitsaggregate 2, 3, 4, 5, insbesondere zur Unterstützung der Nachzerkleinerungsvorrichtung 5, kann das vorschlagsgemäße landwirtschaftliche Erntesystem zusätzlich als weiteren Sensor 19 eine sogenannte Crop Quality Camera 20 aufweisen, also eine Kamera 20, die konfiguriert ist, äußere Eigenschaften, insbesondere ausschließlich äußere Eigenschaften, des Erntegutstroms S zu erfassen. Eine entsprechende weitere Sensoreinrichtung 21 generiert auf Basis der vom weiteren Sensor 19 erfassten Ernteguteigenschaften und/oder -inhaltsstoffe ergänzende Erntegutstromdaten und überträgt diese dann an die Online-Datenverarbeitungseinrichtung 11 oder eine separate Online-Datenverarbeitungseinrichtung (nicht dargestellt), die ebenfalls zur zeitlich gekoppelten Verarbeitung der Daten, insbesondere der Verarbeitung der Daten in Echtzeit, konfiguriert ist. Die eine Online-Datenverarbeitungseinrichtung 11 oder die weitere Online-Datenverarbeitungseinrichtung generiert dann entsprechende Steuerungsdaten, die der Einstelleinheit 13, insbesondere der gemeinsamen Einstelleinheit 13, zugeführt werden, um die Ansteuerung durchzuführen. Da der NIR-Sensor 14 aber auch allein sehr zuverlässig arbeitet, kann auf eine zusätzliche Kamera, insbesondere Crop Quality Camera, auch verzichtet werden, wodurch sich die Herstellungskosten der Erntemaschine 1 reduzieren lassen.

Die Ansteuerung des jeweiligen Arbeitsaggregats 2, 3, 4, 5 bzw. die Parametereinstellung wird dann also nicht alleine auf Basis der Erntegutstromdaten der NIR-Sensoreinrichtung 12 durchgeführt, sondern zusätzlich unter Berücksichtigung weiterer Daten, insbesondere weiterer Erntegutstromdaten, also den erfassten weiteren Inhaltsstoffen und/oder Eigenschaften entsprechenden Daten.

In einem anderen Anwendungsfall generiert die Online-Datenverarbeitungseinrichtung 11 Steuerungsdaten, mit denen die Einstelleinheit 13 als Parametereinstellung die Einstellung der Schnittlänge des Ernteguts 10 im Erntegutstrom S durchführt.

Hier misst der NIR-Sensor 14 insbesondere den Feuchtigkeitsgehalt der Faserbestandteile im Erntegutstrom S, wobei die Online-Datenverarbeitungseinrichtung 11 einen Rückschluss auf den Pflanzenbestandteil "Rohfaser" durchführt, wenn der NIR-Sensor 14 einen Stärkeanteil der an ihm vorbeigeführten Partikel von weniger als 70 %, vorzugsweise von weniger als 60 %, weiter vorzugsweise von weniger als 50 %, misst. Der entsprechend vom NIR-Sensor 14 ebenfalls gemessene Feuchtigkeitsgehalt kann dann den Faserbestandteilen zugeordnet werden, was es erlaubt, den Trockenmassegehalt der Faserbestandteile zu ermitteln. Ist dieser Trockenmassegehalt relativ hoch, kann die Einstelleinheit 13 auf Basis der von der Online-Datenverarbeitungseinrichtung 11 empfangenen Steuerungsdaten die Schnittlänge verkürzen, um dadurch einen nachfolgenden Verdichtungsprozess im Silo zu optimieren. Im umgekehrten Fall erlaubt die Einstelleinheit 13, die Schnittlänge entsprechend zu verlängern, wenn der Trockenmassegehalt der Faserbestandteile vergleichsweise gering ist, diese also eine relativ hohe Feuchte aufweisen.

Eine Einstellung der Schnittlänge des Ernteguts 10 kann beispielsweise dadurch erfolgen, dass die Drehzahl der Zuführeinrichtung 3 und/oder der Häckseltrommel 4 verändert wird.

Bei noch einem weiteren Anwendungsfall ist es mittels der Online-Datenverarbeitungseinrichtung 11 und der Einstelleinheit 13 möglich, als Parametereinstellung die Einstellung der Schnitthöhe des Ernteguts 10 durchzuführen.

Eine Veränderung der Schnitthöhe kann erforderlich sein, wenn im Erntegutstrom S ein vorgegebener Anteil an Rohasche bzw. Sand überschritten wird, was der NIR-Sensor 14 messen kann. Eine Überschreitung des entsprechenden Sollwerts für den Anteil an Rohasche bzw. Sand bewirkt beispielsweise, dass die Einstelleinheit 13 den Abstand des Schneidwerks 2 vom Boden des Feldbestands 16 erhöht. Es ist auch der Fall denkbar, dass der Anteil an Rohfasern im Erntegutstrom S verringert werden soll, da ein entsprechender Sollwert überschritten worden ist, wodurch die Einstelleinheit 13 ebenfalls das Schneidwerk 2 anhebt. Soll dagegen der Anteil an Rohfasern im Erntegutstrom S erhöht werden, kann die Einstelleinheit 13 das Schneidwerk 2 automatisch absenken.

Die zuvor beschriebenen Parametereinstellungen werden bei dem vorschlagsgemäßen landwirtschaftlichen Erntesystem bzw. der Erntemaschine 1 des Erntesystems sowie bei dem vorschlagsgemäßen Verfahren zum Betrieb eines solchen Erntesystems während desselben Ernteprozesses durchgeführt, in dem auch die Inhaltsstoffe und/oder Eigenschaften des Erntegutstroms S von dem NIR-Sensor 14 erfasst werden, so dass sich der Ernteprozess unmittelbar anpassen und optimieren lässt.

Das vorschlagsgemäße landwirtschaftliche Erntesystem und das vorschlagsgemäße Verfahren können schließlich zusätzlich auch zur Steuerung eines oder mehrerer landwirtschaftlicher Arbeitsprozesse, der bzw. die einem Ernteprozess nachfolgen, dienen.

In Fig. 1 ist dazu eine Offline-Datenverarbeitungseinrichtung 23 dargestellt, das heißt eine Datenverarbeitungseinrichtung, die die empfangenen Daten im Unterschied zu der Online-Datenverarbeitungseinrichtung zeitlich unabhängig von ihrem Empfang und/oder zeitlich entkoppelt von ihrer Generierung verarbeiten kann. Die Offline-Datenverarbeitungseinrichtung 23 empfängt von einer Datenübertragungseinheit 22 der landwirtschaftlichen Erntemaschine 1 Erntegutstromdaten und generiert auf Basis der Erntegutstromdaten Steuerungsdaten zur Steuerung eines dem Ernteprozess nachfolgenden landwirtschaftlichen Arbeitsprozesses.

Die hierzu erforderlichen Erntegutstromdaten erzeugt ebenfalls die NIR-Sensoreinrichtung 12 mit dem NIR-Sensor 14. Die Erntegutstromdaten werden dann von der Datenübertragungseinheit 11 der landwirtschaftlichen Erntemaschine 1 an die zusätzliche Offline-Datenverarbeitungseinrichtung 23 übertragen, die hier Teil eines von der landwirtschaftlichen Erntemaschine 1 räumlich beabstandeten Datenverarbeitungszentrum 26 ist. Die Übertragung erfolgt hier und vorzugsweise drahtlos, beispielsweise über ein Mobilfunknetzwerk 29, das hier mit dem Internet (www) verbunden ist, wobei auch drahtlose lokale Netzwerke (WLAN) oder andere drahtlose Kommunikationsprotokolle ebenfalls denkbar sind, um die Erntegutstromdaten an die Offline-Datenverarbeitungseinrichtung 23 zu übertragen.

Im Folgenden werden nun einige konkrete Anwendungsfälle einer Offline-Datenverarbeitungseinrichtung 23 der landwirtschaftlichen Erntemaschine 1 des vorschlagsgemäßen landwirtschaftlichen Erntesystems beispielhaft beschrieben.

Bei einem Ausführungsbeispiel ist die Offline-Datenverarbeitungseinrichtung 23 konfiguriert, Daten über die chemische Zusammensetzung der Frucht des abgeernteten Feldbestands 16 zu generieren, um eine Aussage über die Qualität der Frucht und damit der Ernte zu erhalten. Der Begriff "chemische Zusammensetzung" umfasst unter anderem die stoffliche Zusammensetzung. D.h., in diesem Fall kann die Offline-Datenverarbeitungseinrichtung 23 aus den von der NIR-Sensoreinrichtung 12 generierten Erntegutstromdaten insbesondere Daten über den Eiweißgehalt und/oder die Eiweißart und/oder den Zuckergehalt und/oder den Stärkegehalt und/oder den Fettgehalt (Ölgehalt) der Frucht des abgeernteten Feldbestands 16 generieren. Unter dem Begriff "chemische Zusammensetzung" wird aber auch die elementare Zusammensetzung verstanden, was bedeutet, dass in einem weiteren Ausführungsbespiel die Offline-Datenverarbeitungseinrichtung 23 auch die Anteile verschiedener chemischer Elemente (z.B. Kohlenstoff, Sauerstoff, Wasserstoff, Stickstoff, Schwefel, Phosphor, Kalium, Calcium, Magnesium, Eisen, Bor, Mangan, Zink, Kupfer, Chlor und/oder Molybdän etc.) generieren kann.

Gemäß einem weiteren Ausführungsbeispiel kann die Offline-Datenverarbeitungseinrichtung 23 Daten über den Ernteertrag des abgeernteten Feldbestands 16, also über die Quantität bzw. Menge der eingebrachten Ernte, generieren.

Gemäß noch einem Ausführungsbeispiel ist es denkbar, dass die Offline-Datenverarbeitungseinrichtung 23 Daten über die strukturelle Zusammensetzung des abgeernteten Feldbestands 16 generiert. Der Begriff "strukturelle Zusammenfassung" umfasst beispielsweise den Trockenmassegehalt und/oder den Rohfaseranteil des abgeernteten Feldbestands 16.

Grundsätzlich ist es auch denkbar, dass die Offline-Datenverarbeitungseinrichtung 23 Daten über die volumetrische oder gravimetrische Energiedichte des abgeernteten Feldbestands 16 generiert.

Die von der Offline-Datenverarbeitungseinrichtung 23 jeweils generierten Daten werden dann mit entsprechenden Referenzdaten verglichen. Generiert die Offline-Datenverarbeitungseinrichtung 23 beispielsweise Daten über den Eiweißgehalt der Frucht, entsprechen die Referenzdaten vorgegebenen Sollwerten oder Sollwertebereichen für den Eiweißgehalt. Oder generiert die Offline-Datenverarbeitungseinrichtung 23 beispielsweise Daten über die Eiweißart der Frucht, entsprechen die Referenzdaten vorgegebenen Sollwerten oder Sollwertebereichen, die geeignet sind, eine Eiweißart zu definieren. Eventuelle Abweichungen von oder Übereinstimmungen mit den Referenzdaten, d.h. Sollwerten bzw. Sollwertebereichen, können durch den Vergleich festgestellt und zur Qualitätsbestimmung des abgeernteten Feldbestands 16 herangezogen werden. Das Ergebnis des Vergleichs zwischen den von der Offline-Datenverarbeitungseinrichtung 23 generierten Daten und den entsprechenden Referenzdaten wird dann in Form von Steuerungsdaten, die ebenfalls von der Offline-Datenverarbeitungseinrichtung 23 generiert werden, zur Steuerung mindestens eines dem Ernteprozess nachfolgenden landwirtschaftlichen Arbeitsprozesses verwendet.

Fig. 1 zeigt außerdem, dass das landwirtschaftliche Erntesystem 1 auch ein Ortungssystem 24 umfassend einen GPS-Satelliten 30 und einen an der landwirtschaftlichen Erntemaschine 1 angeordneten Geosensor 31 (GPS-Sensor) aufweist. Auf diese Weise kann die Online-Datenverarbeitungseinrichtung 11 und/oder die Offline-Datenverarbeitungseinrichtung 23 den Erntegutstromdaten, die von der NIR-Sensoreinrichtung 12 generiert worden sind, vom Ortungssystem 24 generierte Geodaten zuordnen und entsprechend auch georeferenzierte Erntegutstromdaten verarbeiten. Dies erlaubt es wiederum, Aussagen über Qualität und Quantität des Feldbestands 16, der zuvor abgeerntet worden ist, zu ganz individuellen Bereichen eines Feldes 7 oder auch zu einem konkreten Feld 7 innerhalb eines Schlages zu erhalten und insbesondere auch die Steuerung des nachfolgenden landwirtschaftlichen Arbeitsprozesses innerhalb des Feldes 7 bzw. innerhalb des Schlages zu variieren und darüber insgesamt die Bearbeitung des gesamten Feldes 7 bzw. des gesamten Schlages zu optimieren.

Die Erntegutstromdaten, Referenzdaten, Steuerungsdaten und/oder Geodaten können schließlich auch von einer Anzeigeeinrichtung 25 angezeigt werden. Diese kann Bestandteil des Datenverarbeitungszentrums 26 (Fig. 1) und/oder der Erntemaschine sein (Fig. 2).

Die von der Offline-Datenverarbeitungseinrichtung 23 generierten Steuerungsdaten, die auch eine Einschätzung der Qualität und Quantität des abgeernteten Feldbestands 16 bzw. der Frucht des abgeernteten Feldbestands 16 erlauben, können dazu dienen, als dem Ernteprozess nachfolgenden landwirtschaftlichen Arbeitsprozess einen oder mehrere der folgenden Arbeitsprozesse zu steuern:
- die Saatgutauswahl und/oder Auswahl der Fruchtfolge für einen nachfolgenden Aussaatvorgang und/oder
- die Auswahl der Saatgutmenge für einen nachfolgenden Aussaatvorgang und/oder
- die Auswahl der Saatgutverteilung auf einem nachfolgend einzusäenden Feld 7 und/oder
- die Steuerung der Saatgutverteilung auf einem Feld 7 während eines nachfolgenden Aussaatvorgangs und/oder
- die Düngemittelauswahl für einen nachfolgenden Düngungsvorgang und/oder
- die Auswahl der Düngemittelmenge für einen nachfolgenden Düngungsvorgang und/oder
- die Auswahl der Düngemittelverteilung auf einem nachfolgend zu düngenden Feld 7 und/oder
- die Steuerung der Düngemittelverteilung auf einem Feld 7 während eines nachfolgenden Düngungsvorgangs und/oder
- die Auswahl der Bodenbearbeitungsart (Pflügen, Eggen o.dgl.) eines Feldes 7 und/oder
- die Steuerung mindestens eines Arbeitsaggregats (Pflug, Egge o.dgl.) während einer Bodenbearbeitung eines Feldes 7 und/oder
- die Auswahl der Nutzungsart (Verwendung als Viehfutter oder als Substrat in einer Biogasanlage) des durch den Förderkanal 15 geströmten Ernteguts 10.

Abschließend sei nochmals hervorgehoben, dass vorschlagsgemäß sowohl die jeweilige Online-Datenverarbeitungseinrichtung als auch die Offline-Datenverarbeitungseinrichtung auf Basis von von einer NIR-Sensoreinrichtung empfangenen Erntegutstromdaten Steuerungsdaten generieren kann. Dabei kann die NIR-Sensoreinrichtung die Erntegutstromdaten auf Basis eines oder mehrerer der zuvor beschriebenen, von einem NIR-Sensor erfassten Inhaltsstoffe und/oder Eigenschaften des Erntegutstroms (Eiweißgehalt, Eiweißart, Zuckergehalt, Stärkegehalt, Fettgehalt und/oder Trockenmassegehalt etc. des Korns; Trockenmassegehalt, Rohfaseranteil, Rohascheanteil, volumetrische Energiedichte und/oder gravimetrische Energiedichte etc. des Ernteguts) generieren.

Grundsätzlich ist es vorstellbar, dass sowohl die jeweilige Online-Datenverarbeitungseinrichtung als auch die Offline-Datenverarbeitungseinrichtung konfiguriert ist, auf Basis der empfangenen Erntegutstromdaten mindestens eine Parametereinstellung mindestens eines wie zuvor beschriebenen Arbeitsaggregats und/oder eine Steuerung mindestens eines wie zuvor beschriebenen, dem Ernteprozess nachfolgenden landwirtschaftlichen Arbeitsprozesses durchzuführen.

### Bezugszeichenliste

- 1: landwirtschaftliche Erntemaschine
- 2: Schneidwerk
- 3: Zuführeinrichtung
- 4: Häckseltrommel
- 5: Nachzerkleinerungsvorrichtung, Cracker
- 6: Feldhäcksler
- 7: Feld
- 8: Transportfahrzeug
- 9: Fahrspur
- 10: Erntegut
- 11: Online-Datenverarbeitungseinrichtung
- 12: NIR-Sensoreinrichtung
- 13: Einstelleinheit
- 14: NIR-Sensor
- 15: Förderkanal
- 16: Feldbestand
- 17: Siliermittelanlage
- 18: Überladerohr
- 19: weiterer Sensor
- 20: Kamera
- 21: weitere Sensoreinrichtung
- 22: Datenübertragungseinheit
- 23: Offline-Datenverarbeitungseinrichtung
- 24: Ortungssystem
- 25: Anzeigeeinrichtung
- 26: Datenverarbeitungszentrum
- 27: Silo
- 28: Biogasanlage
- 29: Mobilfunknetz
- 30: GPS-Satellit
- 31: Geosensor
- S: Erntegutstrom

## Patentansprüche

1. Landwirtschaftliches Erntesystem mit einer landwirtschaftlichen Erntemaschine (1), insbesondere einem Feldhäcksler (6), das bzw die mindestens ein landwirtschaftliches, Arbeitsaggregate (2, 3, 4, 5) aufweist, das die konfiguriert ist sind zur Unterstützung oder Verrichtung landwirtschaftlicher Arbeit, sowie eine Einstelleinheit (13) zur Parametereinstellung des jeweiligen Arbeitsaggregats (2, 3, 4, 5), einen Förderkanal (15) für einen in einem Ernteprozess durch Abernten eines Feldbestands (16) erzeugten Erntegutstrom (S), und eine NIR-Sensoreinrichtung (12) enthaltend einen NIR-Sensor (14), der konfiguriert ist zur Erfassung von Inhaltsstoffen und/oder Eigenschaften des Erntegutstroms (S), wobei der Erntegutstrom (S) in dem Förderkanal (15) an dem NIR-Sensor (14) vorbeiführbar ist,
**dadurch gekennzeichnet,**
**dass** das landwirtschaftliche Erntesystem ferner eine Online-Datenverarbeitungseinrichtung (11) für die Steuerung des jeweiligen Arbeitsaggregats (2, 3, 4, 5) aufweist, die Bestandteil der NIR-Sensoreinrichtung (12) ist und die konfiguriert ist, auf Basis von von der NIR-Sensoreinrichtung (12) generierten, den vom NIR-Sensor (14) erfassten Inhaltsstoffen und/oder Eigenschaften entsprechenden, Erntegutstromdaten Steuerungsdaten zu generieren, die der gemeinsamen Einstelleinheit (13) zugeführt werden, und dass die Einstelleinheit (13) konfiguriert ist, zumindest auf Basis der Steuerungsdaten eine Parametereinstellung des jeweiligen Arbeitsaggregats (2, 3, 4, 5) durchzuführen, wobei die landwirtschaftliche Erntemaschine (1) als Arbeitsaggregat (5) eine Nachzerkleinerungsvorrichtung (5) für das Erntegut (10) im Erntegutstrom (S) aufweist, dass die Online-Datenverarbeitungseinrichtung (11) konfiguriert ist, Daten über den Trockenmassegehalt und/oder Stärkeanteil der Frucht des abgeernteten Feldbestands (16) zu generieren, einen Vergleich der generierten Daten mit Referenzdaten durchzuführen und auf Basis des Vergleichs die Steuerungsdaten zur Durchführung der Parametereinstellung der Nachzerkleinerungsvorrichtung (5) zu generieren, und dass die Einstelleinheit (13) konfiguriert ist, als Parametereinstellung die Einstellung der Antriebsleistung der Nachzerkleinerungsvorrichtung (5) durchzuführen.

2. Landwirtschaftliches Erntesystem nach Anspruch 1, **dadurch gekennzeichnet, dass** die landwirtschaftliche Erntemaschine (1) als Arbeitsaggregat (5) eine Nachzerkleinerungsvorrichtung (5) für das Erntegut (10) im Erntegutstrom (S) aufweist, dass die Online-Datenverarbeitungseinrichtung (11) konfiguriert ist, Daten über den Trockenmassegehalt und/oder Stärkeanteil der Frucht des abgeernteten Feldbestands (16) zu generieren, einen Vergleich der generierten Daten mit Referenzdaten durchzuführen und auf Basis des Vergleichs die Steuerungsdaten zur Durchführung der Parametereinstellung der Nachzerkleinerungsvorrichtung (5) zu generieren, und dass die Einstelleinheit (13) konfiguriert ist, als Parametereinstellung die Einstellung der Spaltweite und/oder der Antriebsleistung der Nachzerkleinerungsvorrichtung (5) durchzuführen.

3. Landwirtschaftliches Erntesystem nach Anspruch 1 oder 2, **dadurch gekennzeichnet, dass** die landwirtschaftliche Erntemaschine (1) als Arbeitsaggregat (2) ein Schneidwerk (2) aufweist, dass die Online-Datenverarbeitungseinrichtung (11) konfiguriert ist, Daten über den Rohfaseranteil des abgeernteten Feldbestands (16) zu generieren, einen Vergleich der generierten Daten mit Referenzdaten durchzuführen und auf Basis des Vergleichs die Steuerungsdaten zur Durchführung der Parametereinstellung des Schneidwerks (2) zu generieren, und dass die Einstelleinheit (13) konfiguriert ist, als Parametereinstellung die Einstellung der Schnitthöhe des Ernteguts (10) durchzuführen.

4. Landwirtschaftliches Erntesystem nach einem der vorhergehenden Ansprüche, **dadurch gekennzeichnet, dass** die landwirtschaftliche Erntemaschine (1) als Arbeitsaggregat (2) ein Schneidwerk (2) aufweist, dass die Online-Datenverarbeitungseinrichtung (11) konfiguriert ist, Daten über den Rohascheanteil des abgeernteten Feldbestands (16) zu generieren, einen Vergleich der generierten Daten mit Referenzdaten durchzuführen und auf Basis des Vergleichs die Steuerungsdaten zur Durchführung der Parametereinstellung des Schneidwerks (2) zu generieren, und dass die Einstelleinheit (13) konfiguriert ist, als Parametereinstellung die Einstellung der Schnitthöhe des Ernteguts (10) durchzuführen.

5. Landwirtschaftliches Erntesystem nach einem der vorhergehenden Ansprüche, **dadurch gekennzeichnet, dass** die landwirtschaftliche Erntemaschine (1) als Arbeitsaggregate (3, 4) eine Zuführeinrichtung (3) und eine Häckseltrommel (4) aufweist, dass die Online-Datenverarbeitungseinrichtung (11) konfiguriert ist, Daten über den Trockenmassegehalt des abgeernteten Feldbestands (16) zu generieren, einen Vergleich der generierten Daten mit Referenzdaten durchzuführen und auf Basis des Vergleichs die Steuerungsdaten zur Durchführung der Parametereinstellung der Zuführeinrichtung (3) und/oder der Häckseltrommel (4) zu generieren, und dass die Einstelleinheit (13) konfiguriert ist, als Parametereinstellung die Einstellung der Schnittlänge des Ernteguts (10) durchzuführen.

6. Landwirtschaftliches Erntesystem nach einem der vorhergehenden Ansprüche, **dadurch gekennzeichnet, dass** die landwirtschaftliche Erntemaschine (1) als Arbeitsaggregate (3, 4) eine Zuführeinrichtung (3) und eine Häckseltrommel (4) aufweist, dass die Online-Datenverarbeitungseinrichtung (11) konfiguriert ist, Daten über den Rohfaseranteil des abgeernteten Feldbestands (16) zu generieren, einen Vergleich der generierten Daten mit Referenzdaten durchzuführen und auf Basis des Vergleichs die Steuerungsdaten zur Durchführung der Parametereinstellung der Zuführeinrichtung (3) und/oder der Häckseltrommel (4) zu generieren, und dass die Einstelleinheit (13) konfiguriert ist, als Parametereinstellung die Einstellung der Schnittlänge des Ernteguts (10) durchzuführen.

7. Landwirtschaftliches Erntesystem nach einem der vorhergehenden Ansprüche, **dadurch gekennzeichnet, dass** die landwirtschaftliche Erntemaschine (1) ferner eine Datenübertragungseinheit (22) aufweist, die konfiguriert ist zur Übertragung von von der NIR-Sensoreinrichtung (12) generierten, den vom NIR-Sensor (14) erfassten Inhaltsstoffen und/oder Eigenschaften entsprechenden, Erntegutstromdaten an eine Offline-Datenverarbeitungseinrichtung (23) zur zeitlich von ihrer Generierung und/oder ihrem Empfang entkoppelten Verarbeitung der Erntegutstromdaten.

8. Landwirtschaftliches Erntesystem nach einem der vorhergehenden Ansprüche, **dadurch gekennzeichnet, dass** die Offline-Datenverarbeitungseinrichtung (23) und/oder die Online-Datenverarbeitungseinrichtung (11) konfiguriert ist, zumindest auf Basis der von der NIR-Sensoreinrichtung (12) generierten Erntegutstromdaten Daten über die chemische Zusammensetzung der Frucht des abgeernteten Feldbestands (16) zu generieren, einen Vergleich der generierten Daten mit Referenzdaten durchzuführen und auf Basis des Vergleichs Steuerungsdaten zur Steuerung eines dem Ernteprozess nachfolgenden landwirtschaftlichen Arbeitsprozesses zu generieren.

9. Landwirtschaftliches Erntesystem nach einem der vorhergehenden Ansprüche, **dadurch gekennzeichnet, dass** die Offline-Datenverarbeitungseinrichtung (23) und/oder die Online-Datenverarbeitungseinrichtung (11) konfiguriert ist, zumindest auf Basis der von der NIR-Sensoreinrichtung (12) generierten Erntegutstromdaten Daten über den Eiweißgehalt und/oder die Eiweißart und/oder den Zuckergehalt und/oder den Stärkegehalt und/oder den Fettgehalt der Frucht des abgeernteten Feldbestands (16) zu generieren, einen Vergleich der generierten Daten mit Referenzdaten durchzuführen und auf Basis des Vergleichs Steuerungsdaten zur Steuerung eines dem Ernteprozess nachfolgenden landwirtschaftlichen Arbeitsprozesses zu generieren.

10. Landwirtschaftliches Erntesystem nach einem der vorhergehenden Ansprüche, **dadurch gekennzeichnet, dass** die Offline-Datenverarbeitungseinrichtung (23) und/oder die Online-Datenverarbeitungseinrichtung (11) konfiguriert ist, zumindest auf Basis der von der NIR-Sensoreinrichtung (12) generierten Erntegutstromdaten Daten über den Ernteertrag des abgeernteten Feldbestands (16) zu generieren, einen Vergleich der generierten Daten mit Referenzdaten durchzuführen und auf Basis des Vergleichs Steuerungsdaten zur Steuerung eines dem Ernteprozess nachfolgenden landwirtschaftlichen Arbeitsprozesses zu generieren.

11. Landwirtschaftliches Erntesystem nach einem der vorhergehenden Ansprüche, **dadurch gekennzeichnet, dass** die Offline-Datenverarbeitungseinrichtung (23) und/oder die Online-Datenverarbeitungseinrichtung (11) konfiguriert ist, zumindest auf Basis der von der NIR-Sensoreinrichtung (12) generierten Erntegutstromdaten Daten über die strukturelle Zusammensetzung des abgeernteten Feldbestands (16) zu generieren, einen Vergleich der generierten Daten mit Referenzdaten durchzuführen und auf Basis des Vergleichs Steuerungsdaten zur Steuerung eines dem Ernteprozess nachfolgenden landwirtschaftlichen Arbeitsprozesses zu generieren.

12. Landwirtschaftliches Erntesystem nach einem der vorhergehenden Ansprüche, **dadurch gekennzeichnet, dass** die Offline-Datenverarbeitungseinrichtung (23) und/oder die Online-Datenverarbeitungseinrichtung (11) konfiguriert ist, zumindest auf Basis der von der NIR-Sensoreinrichtung (12) generierten Erntegutstromdaten Daten über den Trockenmassegehalt und/oder den Rohfaseranteil des abgeernteten Feldbestands (16) zu generieren, einen Vergleich der generierten Daten mit Referenzdaten durchzuführen und auf Basis des Vergleichs Steuerungsdaten zur Steuerung eines dem Ernteprozess nachfolgenden landwirtschaftlichen Arbeitsprozesses zu generieren.

13. Landwirtschaftliches Erntesystem nach einem der vorhergehenden Ansprüche, **dadurch gekennzeichnet, dass** die Offline-Datenverarbeitungseinrichtung (23) und/oder die Online-Datenverarbeitungseinrichtung (11) konfiguriert ist, zumindest auf Basis der von der NIR-Sensoreinrichtung (12) generierten Erntegutstromdaten Daten über die volumetrische Energiedichte und/oder gravimetrische Energiedichte des abgeernteten Feldbestands (16) zu generieren, einen Vergleich der generierten Daten mit Referenzdaten durchzuführen und auf Basis des Vergleichs Steuerungsdaten zur Steuerung eines dem Ernteprozess nachfolgenden landwirtschaftlichen Arbeitsprozesses zu generieren.

14. Landwirtschaftliches Erntesystem nach einem der vorhergehenden Ansprüche, **dadurch gekennzeichnet, dass** der landwirtschaftliche Arbeitsprozess folgendes umfasst:
- die Saatgutauswahl und/oder Auswahl der Fruchtfolge für einen nachfolgenden Aussaatvorgang und/oder
- die Auswahl der Saatgutmenge für einen nachfolgenden Aussaatvorgang und/oder
- die Auswahl der Saatgutverteilung auf einem nachfolgend einzusäenden Feld (7) und/oder
- die Steuerung der Saatgutverteilung auf einem Feld (7) während eines nachfolgenden Aussaatvorgangs und/oder
- die Düngemittelauswahl für einen nachfolgenden Düngungsvorgang und/oder
- die Auswahl der Düngemittelmenge für einen nachfolgenden Düngungsvorgang und/oder
- die Auswahl der Düngemittelverteilung auf einem nachfolgend zu düngenden Feld (7) und/oder
- die Steuerung der Düngemittelverteilung auf einem Feld (7) während eines nachfolgenden Düngungsvorgangs und/oder
- die Auswahl der Bodenbearbeitungsart eines Feldes (7) und/oder
- die Steuerung mindestens eines landwirtschaftlichen Arbeitsaggregats während einer Bodenbearbeitung eines Feldes (7) und/oder
- die Auswahl der Nutzungsart des durch den Förderkanal (15) geströmten Ernteguts (10).

15. Landwirtschaftliches Erntesystem nach einem der Ansprüche 7 bis 14, **dadurch gekennzeichnet, dass** die Offline-Datenverarbeitungseinrichtung (23) ferner konfiguriert ist, auf Basis von von der NIR-Sensoreinrichtung (12) generierten, den vom NIR-Sensor (14) erfassten Inhaltsstoffen und/oder Eigenschaften entsprechenden, Erntegutstromdaten zusätzliche Steuerungsdaten für die Einstelleinheit (13) zu generieren, wobei die Einstelleinheit (13) konfiguriert ist, das jeweilige Arbeitsaggregat (2, 3, 4, 5) zusätzlich auf Basis der zusätzlichen Steuerungsdaten einzustellen.

16. Landwirtschaftliches Erntesystem nach einem der Ansprüche 7 bis 15, **dadurch gekennzeichnet, dass** die Offline-Datenverarbeitungseinrichtung (23) konfiguriert ist,
- Daten über den Trockenmassegehalt und/oder Stärkeanteil der Frucht des abgeernteten Feldbestands (16) zu generieren, einen Vergleich der generierten Daten mit Referenzdaten durchzuführen und auf Basis des Vergleichs die Steuerungsdaten zur Durchführung der Parametereinstellung der Nachzerkleinerungsvorrichtung (5) zu generieren, und dass die Einstelleinheit (13) konfiguriert ist, als Parametereinstellung die Einstellung der Spaltweite und/oder der Antriebsleistung der Nachzerkleinerungsvorrichtung (5) durchzuführen, und/oder
- Daten über den Rohfaseranteil des abgeernteten Feldbestands (16) zu generieren, einen Vergleich der generierten Daten mit Referenzdaten durchzuführen und auf Basis des Vergleichs die Steuerungsdaten zur Durchführung der Parametereinstellung des Schneidwerks (2) zu generieren, und dass die Einstelleinheit (13) konfiguriert ist, als Parametereinstellung die Einstellung der Schnitthöhe des Ernteguts (10) durchzuführen, und/oder
- Daten über den Rohascheanteil des abgeernteten Feldbestands (16) zu generieren, einen Vergleich der generierten Daten mit Referenzdaten durchzuführen und auf Basis des Vergleichs die Steuerungsdaten zur Durchführung der Parametereinstellung des Schneidwerks (2) zu generieren, und dass die Einstelleinheit (13) konfiguriert ist, als Parametereinstellung die Einstellung der Schnitthöhe des Ernteguts (10) durchzuführen, und/oder
- Daten über den Trockenmassegehalt des abgeernteten Feldbestands (16) zu generieren, einen Vergleich der generierten Daten mit Referenzdaten durchzuführen und auf Basis des Vergleichs die Steuerungsdaten zur Durchführung der Parametereinstellung der Zuführeinrichtung (3) und/oder der Häckseltrommel (4) zu generieren, und dass die Einstelleinheit (13) konfiguriert ist, als Parametereinstellung die Einstellung der Schnittlänge des Ernteguts (10) durchzuführen, und/oder
- Daten über den Rohfaseranteil des abgeernteten Feldbestands (16) zu generieren, einen Vergleich der generierten Daten mit Referenzdaten durchzuführen und auf Basis des Vergleichs die Steuerungsdaten zur Durchführung der Parametereinstellung der Zuführeinrichtung (3) und/oder der Häckseltrommel (4) zu generieren, und dass die Einstelleinheit (13) konfiguriert ist, als Parametereinstellung die Einstellung der Schnittlänge des Ernteguts (10) durchzuführen.

17. Landwirtschaftliches Erntesystem nach einem der vorhergehenden Ansprüche, **dadurch gekennzeichnet, dass** es ferner
- als weiteren Sensor (19) eine Kamera (20) aufweist, wobei der Sensor (19) bzw. die Kamera (20) konfiguriert ist, äußere Eigenschaften des Erntegutstroms (S) zu erfassen, und/oder
- ein Ortungssystem (24) und die Offline-Datenverarbeitungseinrichtung (23) und/oder die Online-Datenverarbeitungseinrichtung (11) konfiguriert ist, den Erntegutstromdaten vom Ortungssystem (24) generierte Geodaten zuzuordnen und/oder georeferenzierte Erntegutstromdaten zu verarbeiten, und/oder
- eine Anzeigeeinrichtung (25), die konfiguriert ist zur Anzeige der Erntegutstromdaten, der Referenzdaten, der Steuerungsdaten und/oder der Geodäten.

18. Landwirtschaftliches Erntesystem nach einem der vorhergehenden Ansprüche, **dadurch gekennzeichnet, dass** die Online-Datenverarbeitungseinrichtung (11) und/oder die Offline-Datenverarbeitungs-einrichtung (23) Bestandteil der landwirtschaftlichen Erntemaschine (1) und/oder eines von der landwirtschaftlichen Erntemaschine (1) räumlich entfernten Datenverarbeitungszentrums (26) ist.

19. Verfahren zum Betrieb eines landwirtschaftlichen Erntesystems nach einem der vorhergehenden Ansprüche, **dadurch gekennzeichnet, dass** die Online-Datenverarbeitungseinrichtung (11) für die Steuerung des jeweiligen Arbeitsaggregats (2, 3, 4, 5) auf Basis von von der NIR-Sensoreinrichtung (12) generierten, den vom NIR-Sensor (14) erfassten Inhaltsstoffen und/oder Eigenschaften entsprechenden, Erntegutstromdaten Steuerungsdaten generiert, und dass die Einstelleinheit (13) zumindest auf Basis der Steuerungsdaten eine Parametereinstellung des jeweiligen Arbeitsaggregats (2, 3, 4, 5) durchführt.

20. Verfahren nach Anspruch 19, **dadurch gekennzeichnet, dass** die Datenübertragungseinheit (22) von der NIR-Sensoreinrichtung (12) generierte, den vom NIR-Sensor (14) erfassten Inhaltsstoffen und/oder Eigenschaften entsprechende, Erntegutstromdaten an die Offline-Datenverarbeitungseinrichtung (23) überträgt und die Offline-Datenverarbeitungseinrichtung (23) die Erntegutstromdaten zeitlich von ihrer Generierung und/oder ihrem Empfang entkoppelt verarbeitet.

## Claims

1. An agricultural harvesting system with an agricultural harvester (1), in particular a forage harvester (6), which has agricultural working assemblies (2, 3, 4, 5) which are configured for assisting or performing agricultural work, and an adjusting unit (13) for parameter adjustment of the respective working assembly (2, 3, 4, 5), a conveyor passage (15) for a crop material flow (S) produced in a harvesting process by harvesting a crop (16), and an NIR sensor device (12) containing an NIR sensor (14) which is configured for detecting contents and/or properties of the crop material flow (S), wherein the crop material flow (S) can be guided in the conveyor passage (15) past the NIR sensor (14),
**characterised in that**
the agricultural harvesting system further has an online data processing device (11), for controlling the respective working assembly (2, 3, 4, 5),
which is a component part of the NIR sensor device (12) and which is configured, on the basis of crop material flow data generated by the NIR sensor device (12) and corresponding to the contents and/or properties detected by the NIR sensor (14), to generate control data which are supplied to the common adjusting unit (13), and that the adjusting unit (13) is configured to carry out a parameter adjustment of the respective working assembly (2, 3, 4, 5) at least on the basis of the control data,
wherein the agricultural harvester (1) has, as working assembly (5), a post-comminuting apparatus (5) for the crop material (10) in the crop material flow (S), that the online data processing device (11) is configured to generate data about the dry mass content and/or starch proportion of the fruit of the harvested crop (16), to carry out a comparison of the generated data with reference data and, on the basis of the comparison, to generate the control data for carrying out the parameter adjustment of the post-comminuting apparatus (5), and that the adjusting unit (13) is configured to carry out, as parameter adjustment, the adjustment of the drive power of the post-comminuting apparatus (5).

2. An agricultural harvesting system according to claim 1, **characterised in that** the adjusting unit (13) is configured to carry out, as parameter adjustment, the adjustment of the gap width of the post-comminuting apparatus (5).

3. An agricultural harvesting system according to claim 1 or 2, **characterised in that** the agricultural harvester (1) has, as working assembly (2), a cutter (2), that the online data processing device (11) is configured to generate data about the raw fibre proportion of the harvested crop (16), to carry out a comparison of the generated data with reference data and, on the basis of the comparison, to generate the control data for carrying out the parameter adjustment of the cutter (2), and that the adjusting unit (13) is configured to carry out, as parameter adjustment, the adjustment of the cutting height of the crop material (10).

4. An agricultural harvesting system according to one of the preceding claims, **characterised in that** the agricultural harvester (1) has, as working assembly (2), a cutter (2), that the online data processing device (11) is configured to generate data about the crude ash proportion of the harvested crop (16), to carry out a comparison of the generated data with reference data and, on the basis of the comparison, to generate the control data for carrying out the parameter adjustment of the cutter (2), and that the adjusting unit (13) is configured to carry out, as parameter adjustment, the adjustment of the cutting height of the crop material (10).

5. An agricultural harvesting system according to one of the preceding claims, **characterised in that** the agricultural harvester (1) has, as working assemblies (3, 4), a feed device (3) and a chopping drum (4), that the online data processing device (11) is configured to generate data about the dry mass content of the harvested crop (16), to carry out a comparison of the generated data with reference data and, on the basis of the comparison, to generate the control data for carrying out the parameter adjustment of the feed device (3) and/or the chopping drum (4), and that the adjusting unit (13) is configured to carry out, as parameter adjustment, the adjustment of the cut length of the crop material (10).

6. An agricultural harvesting system according to one of the preceding claims, **characterised in that** the agricultural harvester (1) has, as working assemblies (3, 4), a feed device (3) and a chopping drum (4), that the online data processing device (11) is configured to generate data about the raw fibre proportion of the harvested crop (16), to carry out a comparison of the generated data with reference data and, on the basis of the comparison, to generate the control data for carrying out the parameter adjustment of the feed device (3) and/or the chopping drum (4), and that the adjusting unit (13) is configured to carry out, as parameter adjustment, the adjustment of the cut length of the crop material (10).

7. An agricultural harvesting system according to one of the preceding claims, **characterised in that** the agricultural harvester (1) further has a data transmission unit (22), which is configured to transmit crop material flow data generated by the NIR sensor device (12) and corresponding to the contents and/or properties detected by the NIR sensor (14), to an offline data processing device (23) for the processing of the crop material flow data which is decoupled in respect of time from its generation and/or its reception.

8. An agricultural harvesting system according to one of the preceding claims, **characterised in that** the offline data processing device (23) and/or the online data processing device (11) is configured, at least on the basis of the crop material flow data generated by the NIR sensor device (12), to generate data about the chemical composition of the fruit of the harvested crop (16), to carry out a comparison of the generated data with reference data and, on the basis of the comparison, to generate control data for controlling an agricultural working process following the harvesting process.

9. An agricultural harvesting system according to one of the preceding claims, **characterised in that** the offline data processing device (23) and/or the online data processing device (11) is configured, at least on the basis of the crop material flow data generated by the NIR sensor device (12), to generate data about the protein content and/or protein type and/or sugar content and/or starch content and/or fat content of the fruit of the harvested crop (16), to carry out a comparison of the generated data with reference data and, on the basis of the comparison, to generate control data for controlling an agricultural working process following the harvesting process.

10. An agricultural harvesting system according to one of the preceding claims, **characterised in that** the offline data processing device (23) and/or the online data processing device (11) is configured, at least on the basis of the crop material flow data generated by the NIR sensor device (12), to generate data about the harvest yield of the harvested crop (16), to carry out a comparison of the generated data with reference data and, on the basis of the comparison, to generate control data for controlling an agricultural working process following the harvesting process.

11. An agricultural harvesting system according to one of the preceding claims, **characterised in that** the offline data processing device (23) and/or the online data processing device (11) is configured, at least on the basis of the crop material flow data generated by the NIR sensor device (12), to generate data about the structural composition of the harvested crop (16), to carry out a comparison of the generated data with reference data and, on the basis of the comparison, to generate control data for controlling an agricultural working process following the harvesting process.

12. An agricultural harvesting system according to one of the preceding claims, **characterised in that** the offline data processing device (23) and/or the online data processing device (11) is configured, at least on the basis of the crop material flow data generated by the NIR sensor device (12), to generate data about the dry mass content and/or the raw fibre proportion of the harvested crop (16), to carry out a comparison of the generated data with reference data and, on the basis of the comparison, to generate control data for controlling an agricultural working process following the harvesting process.

13. An agricultural harvesting system according to one of the preceding claims, **characterised in that** the offline data processing device (23) and/or the online data processing device (11) is configured, at least on the basis of the crop material flow data generated by the NIR sensor device (12), to generate data about the volumetric energy density and/or gravimetric energy density of the harvested crop (16), to carry out a comparison of the generated data with reference data and, on the basis of the comparison, to generate control data for controlling an agricultural working process following the harvesting process.

14. An agricultural harvesting system according to one of the preceding claims, **characterised in that** the agricultural working process comprises the following:
- seed material selection and/or selection of the crop sequence for a subsequent sowing process and/or
- selection of the seed material quantity for a subsequent sowing process and/or
- selection of the seed material distribution on a field (7) to be subsequently sowed and/or
- control of the seed material distribution on a field (7) during a subsequent sowing process and/or
- fertiliser selection for a subsequent fertilising process and/or
- selection of the fertiliser quantity for a subsequent fertilising process and/or
- selection of the fertiliser distribution on a field (7) to be subsequently fertilised and/or
- control of the fertiliser distribution on a field (7) during a subsequent fertilising process and/or
- selection of the type of tillage of a field (7) and/or
- control of at least one agricultural working assembly during tillage of a field (7) and/or
- selection of the type of use of the crop material (10) which is caused to flow through the conveyor passage (15).

15. An agricultural harvesting system according to one of claims 7 to 14, **characterised in that** the offline data processing device (23) is further configured, on the basis of crop material flow data generated by the NIR sensor device (12) and corresponding to the contents and/or properties detected by the NIR sensor (14), to generate additional control data for the adjusting unit (13), wherein the adjusting unit (13) is configured to additionally adjust the respective working assembly (2, 3, 4, 5) on the basis of the additional control data.

16. An agricultural harvesting system according to one of claims 7 to 15, **characterised in that** the offline data processing device (23) is configured
- to generate data about the dry mass content and/or starch proportion of the fruit of the harvested crop (16), to carry out a comparison of the generated data with reference data and, on the basis of the comparison, to generate the control data for carrying out the parameter adjustment of the post-comminuting apparatus (5), and that the adjusting unit (13) is configured to carry out, as parameter adjustment, the adjustment of the gap width and/or the drive power of the post-comminuting apparatus (5), and/or
- to generate data about the raw fibre proportion of the harvested crop (16), to carry out a comparison of the generated data with reference data and, on the basis of the comparison, to generate the control data for carrying out the parameter adjustment of the cutter (2), and that the adjusting unit (13) is configured to carry out, as parameter adjustment, the adjustment of the cutting height of the crop material (10), and/or
- to generate data about the crude ash proportion of the harvested crop (16), to carry out a comparison of the generated data with reference data and, on the basis of the comparison, to generate the control data for carrying out the parameter adjustment of the cutter (2), and that the adjusting unit (13) is configured to carry out, as parameter adjustment, the adjustment of the cutting height of the crop material (10), and/or
- to generate data about the dry mass content of the harvested crop (16), to carry out a comparison of the generated data with reference data and, on the basis of the comparison, to generate the control data for carrying out the parameter adjustment of the feed device (3) and/or the chopping drum (4), and that the adjusting unit (13) is configured to carry out, as parameter adjustment, the adjustment of the cut length of the crop material (10), and/or
- to generate data about the raw fibre proportion of the harvested crop (16), to carry out a comparison of the generated data with reference data and, on the basis of the comparison, to generate the control data for carrying out the parameter adjustment of the feed device (3) and/or the chopping drum (4), and that the adjusting unit (13) is configured to carry out, as parameter adjustment, the adjustment of the cut length of the crop material (10).

17. An agricultural harvesting system according to one of the preceding claims, **characterised in that** it further has
- as further sensor (19) a camera (20), wherein the sensor (19) or the camera (20) is configured to detect external properties of the crop material flow (S), and/or
- a position-finding system (24) and the offline data processing device (23) and/or the online data processing device (11) is configured to associate geodata generated by the position-finding system (24) with the crop material flow data and/or to process georeferenced crop material flow data, and/or
- a display device (25), which is configured to display the crop material flow data, the reference data, the control data and/or the geodata.

18. An agricultural harvesting system according to one of the preceding claims, **characterised in that** the online data processing device (11) and/or the offline data processing device (23) is a component part of the agricultural harvester (1) and/or of a data processing centre (26) which is spatially remote from the agricultural harvester (1).

19. A method for operating an agricultural harvesting system according to one of the preceding claims, **characterised in that** the online data processing device (11) generates control data for controlling the respective working assembly (2, 3, 4, 5) on the basis of crop material flow data generated by the NIR sensor device (12) and corresponding to the contents and/or properties detected by the NIR sensor (14), and that the adjusting unit (13), at least on the basis of the control data, carries out parameter adjustment of the respective working assembly (2, 3, 4, 5).

20. A method according to claim 19, **characterised in that** the data transmission unit (22) transmits crop material flow data generated by the NIR sensor device (12) and corresponding to the contents and/or properties detected by the NIR sensor (14) to the offline data processing device (23) and the offline data processing device (23) processes the crop material flow data in a manner decoupled in respect of time from its generation and/or its reception.

## Revendications

1. Système de récolte agricole comprenant une machine agricole de récolte (1), en particulier une ensileuse (6), lequel système, respectivement laquelle machine comportant des organes de travail agricole (2, 3, 4, 5) qui sont configurés pour faciliter ou effectuer un travail agricole, ainsi qu'une unité de réglage (13) pour un réglage paramétrique de l'organe de travail respectif (2, 3, 4, 5), un canal d'alimentation (15) pour un flux de produit récolté (S) généré lors d'un processus de récolte par récolte d'un culture en champ (16), et un capteur NIR (14) contenant un équipement de capteur NIR (12) qui est configuré pour détecter des composants et/ou des propriétés du flux de produit récolté (S), le flux de produit récolté (S) pouvant longer le capteur NIR (14) dans le canal d'alimentation (15),
**caractérisé en ce que**
le système de récolte agricole comporte également un équipement de traitement de données en ligne (11) pour la commande de l'organe de travail respectif (2, 3, 4, 5), lequel fait partie de l'équipement de capteur NIR et est configuré pour générer, sur la base de données de flux de produit récolté correspondant à des composants et/ou des propriétés générés par l'équipement de capteur NIR (12) et détectés par le capteur NIR (14), des données de commande qui sont envoyées à l'unité de réglage commune (13), et **en ce que** l'unité de réglage (13) est configurée pour effectuer, au moins sur la bases de données de commande, un réglage paramétrique de l'organe de travail respectif (2, 3, 4, 5), la machine agricole de récolte (1) comportant comme organe de travail (5) un dispositif de broyage secondaire (5) pour le produit récolté (10) dans le flux de produit récolté (S), **en ce que** l'équipement de traitement de données en ligne (11) est configuré pour générer des données sur la teneur en matière sèche et/ou sur la proportion d'amidon du fruit de la culture en champ récoltée (16), pour effectuer une comparaison des données générées avec des données de référence et, sur la base de la comparaison, pour générer les données de commande aptes à réaliser le réglage paramétrique du dispositif de broyage secondaire (5), et **en ce que** l'unité de réglage (13) est configurée pour réaliser, comme réglage paramétrique, le réglage de la puissance d'entraînement du dispositif de broyage secondaire (5) .

2. Système de récolte agricole selon la revendication 1, **caractérisé en ce que** l'unité de réglage (13) est configurée pour réaliser, comme réglage paramétrique, le réglage de la largeur d'intervalle du dispositif de broyage secondaire (5).

3. Système de récolte agricole selon la revendication 1 ou 2, **caractérisé en ce que** la machine agricole de récolte (1) comporte comme organe de travail (2) un tablier de coupe (2), **en ce que** l'équipement de traitement de données en ligne (11) est configuré pour générer des données sur la proportion de fibres brutes de la culture en champ récoltée (16), pour effectuer une comparaison des données générées avec des données de référence et, sur la base de la comparaison, pour générer les données de commande aptes à réaliser le réglage paramétrique du tablier de coupe (2), et **en ce que** l'unité de réglage (13) est configurée pour réaliser, comme réglage paramétrique, le réglage de la hauteur de coupe du produit récolté (10).

4. Système de récolte agricole selon une des revendications précédentes, **caractérisé en ce que** la machine agricole de récolte (1) comporte comme organe de travail (2) un tablier de coupe (2), **en ce que** l'équipement de traitement de données en ligne (11) est configuré pour générer des données sur la proportion de cendres brutes de la culture en champ récoltée (16), pour effectuer une comparaison des données générées avec des données de référence et, sur la base de la comparaison, pour générer les données de commande aptes à réaliser le réglage paramétrique du tablier de coupe (2), et **en ce que** l'unité de réglage (13) est configurée pour réaliser, comme réglage paramétrique, le réglage de la hauteur de coupe du produit récolté (10).

5. Système de récolte agricole selon une des revendications précédentes, **caractérisé en ce que** la machine agricole de récolte (1) comporte comme organes de travail (3, 4) un équipement d'amenée (3) et un rotor de hachage (4), **en ce que** l'équipement de traitement de données en ligne (11) est configuré pour générer des données sur la teneur en matière sèche de la culture en champ récoltée (16), pour effectuer une comparaison des données générées avec des données de référence et, sur la base de la comparaison, pour générer les données de commande aptes à réaliser le réglage paramétrique de l'équipement d'amenée (3) et/ou du rotor de hachage (4), et **en ce que** l'unité de réglage (13) est configurée pour réaliser, comme réglage paramétrique, le réglage de la longueur de coupe du produit récolté (10).

6. Système de récolte agricole selon une des revendications précédentes, **caractérisé en ce que** la machine agricole de récolte (1) comporte comme organes de travail (3, 4) un équipement d'amenée (3) et un rotor de hachage (4), **en ce que** l'équipement de traitement de données en ligne (11) est configuré pour générer des données sur la proportion de fibres brutes de la culture en champ récoltée (16), pour effectuer une comparaison des données générées avec des données de référence et, sur la base de la comparaison, pour générer les données de commande aptes à réaliser le réglage paramétrique de l'équipement d'amenée (3) et/ou du rotor de hachage (4), et **en ce que** l'unité de réglage (13) est configurée pour réaliser, comme réglage paramétrique, le réglage de la longueur de coupe du produit récolté (10).

7. Système de récolte agricole selon une des revendications précédentes, **caractérisé en ce que** la machine agricole de récolte (1) comporte en outre une unité de transmission de données (22) qui est configurée pour transmettre à un équipement de traitement de données hors ligne (23) des données de flux de produit récolté qui sont générées par l'équipement de capteur NIR (12) et qui correspondent aux composants et/ou aux propriétés détectés par le capteur NIR (14), en vue du traitement des données de flux de produit récolté de façon temporellement découplée de leur génération et/ou de leur réception.

8. Système de récolte agricole selon une des revendications précédentes, **caractérisé en ce que** l'équipement de traitement de données hors ligne (23) et/ou l'équipement de traitement de données en ligne (11) est configuré pour générer, au moins sur la base des données de flux de produit récolté générées par l'équipement de capteur NIR (12), des données sur la composition chimique du fruit de la culture en champ récoltée (16), pour effectuer une comparaison des données générées avec des données de référence et pour générer, sur la base de la comparaison, des données de commande aptes à commander un processus de travail agricole consécutif au processus de récolte.

9. Système de récolte agricole selon une des revendications précédentes, **caractérisé en ce que** l'équipement de traitement de données hors ligne (23) et/ou l'équipement de traitement de données en ligne (11) est configuré pour générer, au moins sur la base des données de flux de produit récolté générées par l'équipement de capteur NIR (12), des données sur la teneur en albumine et/ou le type d'albumine et/ou la teneur en sucre et/ou la teneur en amidon et/ou la teneur en graisses du fruit de la culture en champ récoltée (16), pour effectuer une comparaison des données générées avec des données de référence et pour générer, sur la base de la comparaison, des données de commande aptes à commander un processus de travail agricole consécutif au processus de récolte.

10. Système de récolte agricole selon une des revendications précédentes, **caractérisé en ce que** l'équipement de traitement de données hors ligne (23) et/ou l'équipement de traitement de données en ligne (11) est configuré pour générer, au moins sur la base des données de flux de produit récolté générées par l'équipement de capteur NIR (12), des données sur le rendement de récolte de la culture en champ récoltée (16), pour effectuer une comparaison des données générées avec des données de référence et pour générer, sur la base de la comparaison, des données de commande aptes à commander un processus de travail agricole consécutif au processus de récolte.

11. Système de récolte agricole selon une des revendications précédentes, **caractérisé en ce que** l'équipement de traitement de données hors ligne (23) et/ou l'équipement de traitement de données en ligne (11) est configuré pour générer, au moins sur la base des données de flux de produit récolté générées par l'équipement de capteur NIR (12), des données sur la composition structurelle de la culture en champ récoltée (16), pour effectuer une comparaison des données générées avec des données de référence et pour générer, sur la base de la comparaison, des données de commande aptes à commander un processus de travail agricole consécutif au processus de récolte.

12. Système de récolte agricole selon une des revendications précédentes, **caractérisé en ce que** l'équipement de traitement de données hors ligne (23) et/ou l'équipement de traitement de données en ligne (11) est configuré pour générer, au moins sur la base des données de flux de produit récolté générées par l'équipement de capteur NIR (12), des données sur la teneur en matière sèche et/ou la proportion de fibres brutes de la culture en champ récoltée (16), pour effectuer une comparaison des données générées avec des données de référence et pour générer, sur la base de la comparaison, des données de commande aptes à commander un processus de travail agricole consécutif au processus de récolte.

13. Système de récolte agricole selon une des revendications précédentes, **caractérisé en ce que** l'équipement de traitement de données hors ligne (23) et/ou l'équipement de traitement de données en ligne (11) est configuré pour générer, au moins sur la base des données de flux de produit récolté générées par l'équipement de capteur NIR (12), des données sur la densité énergétique volumétrique et/ou la densité énergétique gravimétrique de la culture en champ récoltée (16), pour effectuer une comparaison des données générées avec des données de référence et pour générer, sur la base de la comparaison, des données de commande aptes à commander un processus de travail agricole consécutif au processus de récolte.

14. Système de récolte agricole selon une des revendications précédentes, **caractérisé en ce que** le processus de travail agricole inclut ce qui suit :
- la sélection de semences et/ou la sélection de la rotation des cultures pour une opération de semis ultérieure et/ou
- la sélection de la quantité de semences pour une opération de semis ultérieure et/ou
- la sélection de la répartition des semences dans un champ (7) à ensemencer ultérieurement et/ou
- la commande de la répartition des semences dans un champ (7) pendant une opération de semis ultérieure et/ou
- la sélection de fertilisant pour une opération de fertilisation ultérieure et/ou
- la sélection de la quantité de fertilisant pour une opération de fertilisation ultérieure et/ou
- la sélection de la répartition du fertilisant dans un champ (7) à fertiliser ultérieurement et/ou
- la commande de la répartition du fertilisant dans un champ (7) pendant une opération de fertilisation ultérieure et/ou
- la sélection du type de travail du sol d'un champ (7) et/ou
- la commande au moins d'un organe de travail agricole pendant un travail du sol d'un champ (7) et/ou
- la sélection du type d'utilisation du produit récolté (10) traversant le canal d'alimentation (15).

15. Système de récolte agricole selon une des revendications 7 à 14, **caractérisé en ce que** l'équipement de traitement de données hors ligne (23) est également configuré pour générer, sur la base de données de flux de produit récolté qui sont générées par l'équipement de capteur NIR (12) et qui correspondent aux composants et/ou aux propriétés détectés par le capteur NIR (14), des données de commande supplémentaires pour l'unité de réglage (13), l'unité de réglage (13) étant configurée pour régler l'organe de travail respectif (2, 3, 4, 5) sur la base, en plus, des données de commande supplémentaires.

16. Système de récolte agricole selon une des revendications 7 à 15, **caractérisé en ce que** l'équipement de traitement de données hors ligne (23) est configuré
- pour générer des données sur la teneur en matière sèche et/ou la proportion d'amidon du fruit de la culture en champ récoltée (16), pour effectuer une comparaison des données générées avec des données de référence et, sur la base de la comparaison, pour générer les données de commande aptes à réaliser le réglage paramétrique du dispositif de broyage secondaire (5), et **en ce que** l'unité de réglage (13) est configurée pour réaliser, comme réglage paramétrique, le réglage de la largeur d'intervalle et/ou de la puissance d'entraînement du dispositif de broyage secondaire (5), et/ou
- pour générer des données sur la proportion de fibres brutes de la culture en champ récoltée (16), pour effectuer une comparaison des données générées avec des données de référence et, sur la base de la comparaison, pour générer les données de commande aptes à réaliser le réglage paramétrique du tablier de coupe (2), et **en ce que** l'unité de réglage (13) est configurée pour réaliser, comme réglage paramétrique, le réglage de la hauteur de coupe du produit récolté (10), et/ou
- pour générer des données sur la proportion de cendres brutes de la culture en champ récoltée (16), pour effectuer une comparaison des données générées avec des données de référence et, sur la base de la comparaison, pour générer les données de commande aptes à réaliser le réglage paramétrique du tablier de coupe (2), et **en ce que** l'unité de réglage (13) est configurée pour réaliser, comme réglage paramétrique, le réglage de la hauteur de coupe du produit récolté (10), et/ou
- pour générer des données sur la teneur en matière sèche de la culture en champ récoltée (16), pour effectuer une comparaison des données générées avec des données de référence et, sur la base de la comparaison, pour générer les données de commande aptes à réaliser le réglage paramétrique de l'équipement d'amenée (3) et/ou du rotor de hachage (4), et **en ce que** l'unité de réglage (13) est configurée pour réaliser, comme réglage paramétrique, le réglage de la longueur de coupe du produit récolté (10), et/ou
- pour générer des données sur la proportion de fibres brutes de la culture en champ récoltée (16), pour effectuer une comparaison des données générées avec des données de référence et, sur la base de la comparaison, pour générer les données de commande aptes à réaliser le réglage paramétrique de l'équipement d'amenée (3) et/ou du rotor de hachage (4), et **en ce que** l'unité de réglage (13) est configurée pour réaliser, comme réglage paramétrique, le réglage de la longueur de coupe du produit récolté (10).

17. Système de récolte agricole selon une des revendications précédentes, **caractérisé en ce qu'**il comporte également
- comme autre capteur (19), une caméra (20), le capteur (19), respectivement la caméra (20) étant configuré pour détecter des propriétés extérieures du flux de produit récolté (S), et/ou
- un système de localisation (24), et l'équipement de traitement de données hors ligne (23) et/ou l'équipement de traitement de données en ligne (11) étant configuré pour associer aux données de flux de produit récolté des données géographiques générées par le système de localisation (24) et/ou des données de flux de produit récolté géoréférencées, et/ou
- un équipement d'affichage (25) qui est configuré pour afficher les données de flux de produit récolté, les données de référence, les données de commande et/ou les données géographiques.

18. Système de récolte agricole selon une des revendications précédentes, **caractérisé en ce que** l'équipement de traitement de données en ligne (11) et/ou l'équipement de traitement de données hors ligne (23) font partie intégrante de la machine agricole de récolte (1) et/ou d'un centre de traitement de données (26) distant spatialement de la machine agricole de récolte (1).

19. Procédé pour exploiter un système de récolte agricole selon une des revendications précédentes, **caractérisé en ce que** l'équipement de traitement de données en ligne (11) génère, pour la commande de l'organe de travail respectif (2, 3, 4, 5), sur la base de données de flux de produit récolté qui sont générées par l'équipement de capteur NIR (12) et qui correspondent aux composants et/ou aux propriétés détectés par le capteur NIR (14), et **en ce que** l'unité de réglage (13) effectue, au moins sur la base des données de commande, un réglage paramétrique de l'organe de travail respectif (2, 3, 4, 5).

20. Procédé selon la revendication 18, **caractérisé en ce que** l'unité de transmission de données (22) transmet à l'équipement de traitement de données hors ligne (23) des données de flux de produit récolté qui sont générées par l'équipement de capteur NIR (12) et qui correspondent aux composants et/ou aux propriétés détectés par le capteur NIR (14), et l'équipement de traitement de données hors ligne (23) traite les données de flux de produit récolté de façon temporellement découplée de leur génération et/ou de leur réception.
